(19)

Europäisches
Patentamt

European
Patent Office

Office européen
des brevets

(11) **EP 4 198 063 A1**

(12) **EUROPEAN PATENT APPLICATION**

(43) Date of publication:
**21.06.2023 Bulletin 2023/25**

(21) Application number: **22461578.1**

(22) Date of filing: **11.07.2022**

(51) International Patent Classification (IPC):
*C08F 112/14* $^{(2006.01)}$     *C08F 120/38* $^{(2006.01)}$
*C08J 7/16* $^{(2006.01)}$     *C08F 292/00* $^{(2006.01)}$

(52) Cooperative Patent Classification (CPC):
(C-Sets available)
**C08F 292/00; C08F 120/38; C08J 7/16;**
C08F 112/30; C08F 2438/01          (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.12.2021 PL 43992621**

(71) Applicant: **UNIWERSYTET JAGIELLONSKI
31-007 Kraków (PL)**

(72) Inventors:
• **Wolski, Karol**
  **30-383 Kraków (PL)**
• **Zapotoczny, Szczepan**
  **30-381 Kraków (PL)**
• **Grobelny, Anna**
  **30-392 Kraków (PL)**
• **Smenda, Joanna**
  **30-363 Kraków (PL)**

(74) Representative: **Witek, Rafal**
**WTS Patent Attorneys**
**Witek, Sniezko & Partners**
**ul. Weigla 12**
**53-114 Wroclaw (PL)**

(54) **POLYMER BRUSHES, METHOD OF PRODUCTION AND APPLICATION THEREOF**

(57)     A polymer brush comprising a conductive substrate and a polymer layer grafted onto said substrate is disclosed, wherein the grafted layer of said polymer brush comprises two types of macroparticles: conjugated and polyelectrolyte, which are attached to a conductive surface, and a method for obtaining such a polymer brush.

**EP 4 198 063 A1**

(52) Cooperative Patent Classification (CPC): (Cont.)

C-Sets
**C08F 292/00, C08F 212/30;**
**C08F 292/00, C08F 220/38**

**Description**

The object of the invention is a polymer brush comprising a conductive substrate and a polymer layer grafted onto said substrate, wherein the grafted layer of said polymer brush comprises two types of macroparticles: conjugated and polyelectrolyte, which are attached to the conducting surface. Furthermore, the object of the invention is a method for producing such a polymer brush.

**Technical field**

The invention relates to conjugated polymers (CP), in particular conjugated polymer brushes (CPB) comprising stretched and covalently surface-grafted polymer chains that are molecularly arranged and oriented perpendicularly to the substrate and exhibit improved electrical properties.

**State of the art**

The dynamic development in the field of conjugated polymers (CP) caused that they can exhibit conductivity as high as metals. CPs are used in: organic solar cells, chemical and biological sensors, field effect transistors and energy storage devices.

CPs in their native (undoped) form are semiconductors, but after chemical modifications (doping) their conductivity can be increased by several orders of magnitude. There are many factors that influence the optical and electrical properties of CPs, such as the doping process, conjugation length, macromolecular order/conformation, and regioregularity. While high regioregularity and long effective conjugation of CP are guaranteed by various polymerization techniques, chemical or electrochemical doping of CPs with low molecular weight compounds does not provide sufficiently high stability for long-term use of these materials. Moreover, the order of macromolecules is difficult to control in the case of bulk polymers, which makes it difficult to obtain materials with directional conductivity. Furthemore, films deposited on the surface by means of spin-coating, due to the low energy of interaction with the substrate (physical adsorption), can quite easily delaminate and detach from the substrate.

Conjugated Polymer Brushes (CPBs) can provide a solution to the above-mentioned problems. Such materials consist of stretched and covalently surface-grafted polymer chains that are molecularly arranged and oriented perpendicularly to the substrate. This orientation enables the efficient and directional transport of charge carriers along stretched conjugated chains.

Polymer brushes can be synthesized by two basic methods called "grafting from" and "grafting to/from". However, only the first approach results in the formation of dense brushes with macromolecules with a stretched conformation. In the "grafting from" method, polymerization is initiated directly from the graft surface, so the techniques used in this method must represent a chain polymerization mechanism. The main representatives of the "grafting from" method are the so-called surface initiated reversible deactivation radical polymerizations (SI-RDRP). The SI-RDRP techniques include surface initiated: atom transfer radical polymerization (SI-ATRP), nitroxide mediated polymerization (SI-NMP), reverse addition-fragmentation chain transfer polymerization (SI-RAFT) or photoiniferter mediated polymerization (SI-PIMP) as for example described in J.O. Zoppe, N.C. Ataman, P. Mocny, J. Wang, J. Moraes, H.A. Klok, Surface-Initiated Controlled Radical Polymerization: State-of-the-Art, Opportunities, and Challenges in Surface and Interface Engineering with Polymer Brushes, Chem. Rev. 117 (2017) 1105-1318. https://doi.org/10.1021/acs.chemrev.6b00314. SI-RDRP techniques offer: low percentage of permanently terminated macromolecules (inactive in polymerization), narrow molecular weight distribution of formed polymers and mild reaction conditions. All these important functions enable the creation of advanced polymer structures.

However, the SI-RDRP methods cannot be applied directly to the synthesis of CPBs. CPs are typically synthesized by various polycondensation methods showing a gradual growth mechanism of the polymer chains, which is not in line with the preferred "grafting from" approach due to the formation of macromolecules mainly in solution and not attached to surfaces. Although conjugated polymer brushes can be synthesized by Kumada Catalyst Transfer Polymerization (SI-KCTP), Stille and Suzuki polymerization, the use of these methods is limited due to the following problems: the formation of thick brushes from bulky monomers is difficult due to the reaction mechanism; Stille polymerization makes it possible to create only very short brushes (a few nm); polymer layers obtained by these methods are usually contaminated with metal ions used as catalysts and residues of unbound polymers from the solution; the formation of dense brushes is difficult to achieve.

In response to these problems, a new approach was developed, called self-templating surface-initiated polymerization (ST-SIP), which uses the advantages of SI-RDRP techniques (see: Szwarzynski, J. Kowal, S. Zapotlocz, Self-templating surface-initiated polymerization: A route to synthesize conductive brushes, J. Mater. Chem. 22 (2012) 20179-20181. https://doi.org/10.1039/c2jm34480g; K. Wolski, M. Szuwarzynski, S. Zapotoczny, A facile route to electronically conductive polyelectrolyte brushes as platforms of molecular wires, Chem. Sci. 6 (2015) 1754-1760. https://doi.org/10.1039/c4sc04048a.; M. Stowikowska, K. Wolski, A.J. Wójcik, D. Wesner, H. Schönherr, S. Zapotlocz, Unraveling the nanomechanical properties of surface-grafted conjugated polymer brushes with ladder-like architecture, Polym. Chem. 11 (2020) 7050-7062. Https://doi.org/10.1039/d0py01422b; M. Szuwarzynski, K. Wolski, S. Zapotoczny, Enhanced stability of conductive polyacetylene in ladder-like surface-grafted brushes, Polym. Chem. 7 (2016). https://doi.org/10.1039/c6py00977h; K. Wolski, A. Gruszkiewicz, M. Wytrwal-Sarna, A. Bernasik, S. Zapotlocz, The grafting density and thickness of polythiophene-based brushes determine the orientation, conjugation length and stability of the grafted chains, Polym. Chem. 8 (2017) 6250-6262. https://doi.org/10.1039/c7py01418j). This strategy is based on a two-step process and involves the use of bifunctional monomers. Starting polymer brushes with side groups capable of forming conjugated chains (thiophene, acetylene, etc.) are grafted onto the substrate by SI-RDRP techniques, creating a kind of covalently grafted matrices, a template with macromolecules acting as multimonomers. In the next step, side groups (often after deprotection) of these macromolecules, which in polymer brushes adopt a stretched conformation, are subjected to polymerization, resulting in the so-called conjugated ladder-like brushes (CLB).

The ST-SIP technique has been used so far for the synthesis of brushes based on polyacetylene and polythiophene. The obtained materials showed higher conductivity and stability than analogous polymers synthesized in solution. The ST-SIP method solves some of the problems mentioned in the context of other methods of SPB synthesis, as it ensures the formation of thick layers (even 250 nm) with high grafting densities, the growth of brushes in a controlled manner only from the substrate without polymer impurities from the solution; preparation of macromolecules with active ends; formation of ladder-like macromolecules that exhibit greater thermal stability and chemical resistance than linear, single-stranded counterparts. However, a common problem in the production of conductive thin films, which also affects CLBs, relates to the poor stability of CPs doped with low molecular weight compounds.

This problem was somewhat resolved, in the classical approach, by mixing poly(3,4-ethylenedioxythiophene) and poly(styrenesulfonate) (PEDOT:PSS) together. The positive charges generated on significantly oxidized conjugated PEDOT chains are stabilized by the polyanion - PSS. This makes PEDOT:PSS the most used material in organic electronics and is considered a promising material that can replace inorganic conductors in a variety of applications. Conductivity of PEDOT:PSS can be easily regulated by appropriate selection of molar ratios of PEDOT and PSS - with increasing content of PEDOT the conductivity of the material increases. In addition, the conductive properties of the PEDOT:PSS layer can also be easily modified by processing conditions (e.g. washing with various solvents) or the so-called secondary doping. Unfortunately, PEDOT:PSS films show conductivity in the direction perpendicular to the substrate (desirable in many applications) even 3 orders of magnitude lower than the in-plane conductivity (parallel to the substrate), due to e.g. lamellar arrangement of the ellipsoidal PEDOT particles, which are separated by the weakly conducting electronically chains of PSS. Moreover, given the general problems with the low stability of films deposited on the surface by spin-coating, the lack of covalent bonding to the substrate, it seems that the full potential of this attractive polymer mixture is still underused.

Many optoelectronic devices, in particular photovoltaic cells, require electrodes constructed of a material with a sufficiently low work function (WF) to be able to efficiently and selectively transport and inject electrons into the system. Metals with a low WF value such as alkaline earth (Ca, Mg) or alkaline (Li, Cs) metals meet this requirement, but are chemically very reactive and oxidize readily in the presence of surrounding oxygen and water. Other systems are also used for this purpose, for example coatings containing molecules with a large number of amino groups (low molecular weight compounds and polymers). However, their stability under ambient conditions is also limited.

In recent years, there has been a growing interest in conjugated polymers with low WF values. Layers based on PEDOT:PSS show a "hole" conductivity in constructed electrical devices due to high work function (4.7-5.4 eV). The work function of the PEDOT:PSS can be reduced to some extent (WF$\geq$3.9 eV) by modification with polyethyleneimine or sodium and cesium ions. The synthesis of polymers with ultra-low work function (below 3 eV) would be highly desirable as other materials with these characteristics could be replaced in many applications.

## Description of the invention

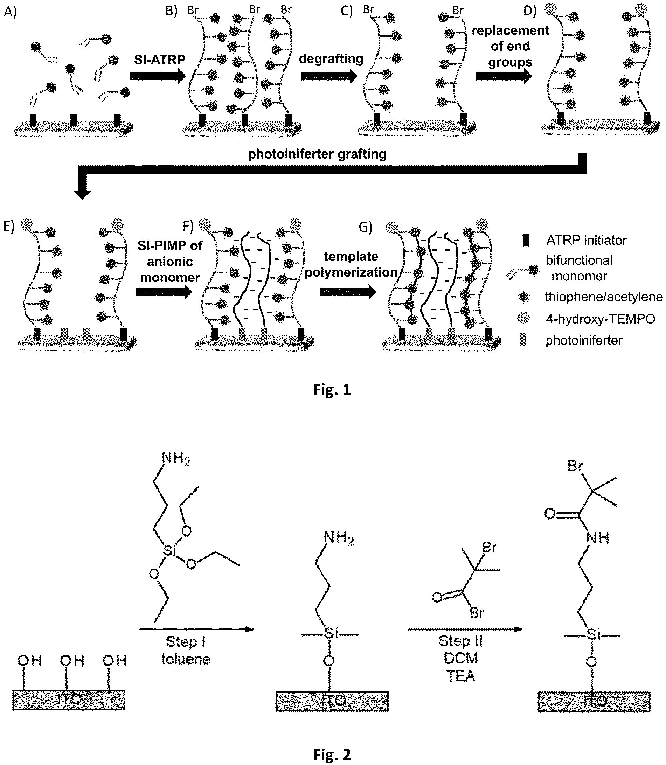

The present invention relates to the synthesis of a new material - two-component (mixed) polymer brushes containing conjugated and polyelectrolyte macromolecules attached to the surface, which, like in the case of PEDOT:PSS, use the synergistic effect of conjugated polymers and polyanions, but show a significant anisotropy of conductivity in the direction opposite to the PEDOT:PSS layers. The experimental procedure leading to the preparation of these highly ordered polymer films is novel in nature, leading to previously unprecedented brushes containing conjugated and polyelectrolyte chains in the structure (Fig. 1). Most often, two-component brushes obtained by grafting from the surface use mixed monolayers of initiators of two types of polymerization, from which two types of macromolecules grow as a result of sequential polymerization. So far, the prior art has not shown the method proposed here based on three basic steps: (1) chemically cutting off a portion of macromolecules from previously formed single-component brushes, (2) subsequent deposition of initiators in the generated vacant sites on the surface, and (3) carrying out surface-initiated polymerization using the second type of monomer. In the case shown in Fig. 1, the process for obtaining the brushes also includes intermediate steps. In particular, in the 1st step, brushes with thiophene side groups are obtained, which in the 2nd step are degrafted by cutting off the surface and removing some of the macromolecules. In order to prevent the continuation of the growth of these chains in the subsequent steps of the process, active end groups on the macromolecules are deactivated. In the next step, initiators of the second polymerization are applied to the surface of the substrate, which leads to the formation of polyelectrolyte chains. In the final stage, the polymerization of thiophene groups takes place on the macromolecules of the multimonomers obtained in the first step.

The presented methodology can also be used to obtain other than the presented two-component brushes, but also three and more component mixed brushes.

The obtained mixed brushes containing conjugated and polyelectrolyte chains show extremely low work function which, to the best of our knowledge, has not been achieved so far with any polythiophene derivative or PEDOT:PSS materials. Materials with this type of properties can find applications as highly selective electron transporting layers, e.g. in OLEDs and photovoltaic cells. The conducted structural studies also showed the possibility of controlling the mutual spatial distribution of two types of polymers, which is important in the context of obtaining smart coatings with switchable properties.

The subject of the invention is a brush comprising:

a) electrically conductive substrate,
b) a polymer layer grafted onto this substrate,

characterized in that the grafted layer of the polymer brush comprises at least two types of macroparticles: conjugated and polyelectrolyte, which are attached to the substrate.

Preferably, the conducting substrate is metal oxides having conductive or semiconductive properties, preferably containing a metal oxide selected from the group comprising: indium tin oxide, silicon oxide, titanium (IV) oxide, zinc oxide, tin (IV) oxide or mixtures thereof. Particularly preferably, the polymer brush has a conductive substrate in the form of a glass plate with indium tin oxide (ITO) on the surface.

Preferably the conjugated macromolecule in the polymer brush is poly(3-methylthiophenylmethacrylate).

Preferably, the polyelectrolyte macromolecule in the polymer brush is poly(sodium styrenesulfonate).

Preferably, the molar ratio of conjugated to polyelectrolyte macromolecules in the polymer brush is in the range from 10:90 to 90:10, preferably from 43:57 to 87:13, respectively.

Preferably, the brush thicknesses in a polymer brush are from 5 to 100 nm, preferably from 12 to 35 nm.

Preferably, the conductivity of the polymer brush layer is anisotropic, wherein the conductivity value is higher in the direction perpendicular to the substrate than conductivity parallel to the substrate.

Preferably, the ratio of the conductivity perpendicular to the substrate relative to the conductivity parallel to the substrate is from 10 to 180.

Preferably the work function is in the range of 2.3-3.6 eV.

Another object of the invention is a method of obtaining a polymer brush, characterized in that it comprises the following steps:

a) functionalisation of the conductive substrate by a surface initiated reversible deactivation radical polymerization (one of them is ATRP),
b) obtaining brushes whose chains (TYPE1) contain side groups capable of polymerization to form conjugated chains,
c) degrafting of the obtained brushes,
d) deactivation of the reactive end groups of macromolecules as a result of reactions with stable radicals (permanent deactivation of chains),
e) grafting the molecules of surface initiated reversible deactivation radical polymerization (one of them also includes the process with photoiniferter) in the vacant sites in degrafted TYPE1 brushes,
f) grafting of polyelectrolyte chains (TYPE2),
g) template polymerization of side groups in TYPE1 chains.

Preferably, the method of obtaining a polymer brush is characterized in that it comprises the following steps:

a) functionalisation of the conductive substrate by means of an atom transfer radical polymerization (ATRP)
b) obtaining poly(3-methylthiophenylmethacrylate) brushes
c) degrafting of poly(3-methylthiophenylmethacrylate) brushes
d) deactivation of reactive end groups by reaction with stable radicals
e) grafting photoiniferter molecules into vacant sites in poly(3-methylthiophenylmethacrylate) brushes
f) grafting of poly(sodium styrenesulfonate) chains
g) template polymerization of side thiophene groups in poly(3-methylthiophenylmethacrylate) brushes.

Preferably, the method of obtaining a polymer brush is characterized in that the conductive substrate of step a) is a glass plate with indium tin oxide on its surface.

Preferably, the method of obtaining a polymer brush is characterized in that the atom transfer radical polymerization in step a) is carried out in one step (SI-ATRP or metal-free SI-ATRP).

Preferably, the method of obtaining a polymer brush is characterized in that the atom transfer radical polymerization initiator in step a) is a (3-aminopropyl)triethoxysilane with 2-bromoisobutanoic acid bromide or 3-(trichlorosilyl)propyl 2-bromo-2-methylpropanoate system.

Preferably, the method of obtaining a polymer brush is characterized in that the preparation of poly(3-methylthiophenylmethacrylate) brushes in step b) is carried out with the use of copper (I) bromide/copper (II) bromide/N,N-dimethylformamide/1,1,4,7,10,10-hexamethyltriethyltetramine/3-methylthiophenylmethacrylate system or with N-phenylphenothiazine/dimethylacetamide/3-methylthiophenylmethacrylate system.

Preferably, the method of obtaining a polymer brush is characterized in that step c) is carried out by dipping the plates prepared according to b) into a solution of tetrabutylammonium fluoride in tetrahydrofuran.

Preferably, the method of obtaining a polymer brush is characterized in that, in step c), degrafting reaction times range from 5 to 180 minutes.

Preferably the method of obtaining a polymer brush is characterized in that step d) is carried out by transferring a solution containing $N,N,N',N'',N''$-pentamethyldiethyltriamine in $N,N$-dimethylformamide and copper (I) bromide over the plates prepared in step c), by adding a solution of 4-hydroxy-2,2,6,6-tetramethylpiperidine-1-oxyl in $N,N$-dimethylformamide; preferably the reaction is carried out for 1 to 2 hours at a temperature of 60 to 70 °C in an oxygen-free atmosphere.

Preferably, the method of obtaining a polymer brush is characterized in that step e) is carried out on plates prepared with p-(chloromethyl)phenyltrimethoxysilane, at room temperature under limited light, and diethylamine diethiocarbamate/tetrahydrofuran system.

Preferably the method of obtaining a polymer brush is characterized in that step f) is carried out with milliliter or microliter volumes of the reagents,

> wherein the use of milliliter volumes of reagents consists in placing the plates prepared in step e) in a glass vessel in a sodium p-styrenesulfonate/water system and irradiation with UVB lamps; the polymerization time ranges from 45 to 120 minutes;
>
> wherein the use of microliter volumes of reagents consists in dropping an aqueous solution of sodium p-styrenesulfonate on the surface of the plate prepared in step e) with a microliter syringe and irradiation with a LED lamp emitting light with a wavelength of 340 nm; the polymerization time ranges from 45 to 60 minutes.

Preferably, the method of obtaining a polymer brush is characterized in that step g) is carried out with $FeCl_3$ and at temperature of about 4 °C.

Another object of the invention is the use of a polymer brush according to the invention as defined above as a layer that effectively reduces the work function of the modified substrate/electrode.

According to the invention, mixed brushes can be obtained on non-ITO metal oxides with conductive or semiconductive properties. Similar surface chemistry (presence of surface hydroxyl groups) to ITO or silicon oxide is also exhibited by other metal oxides, e.g. titanium (IV) oxide, zinc oxide, tin (IV) oxide and other transparent conductive oxides widely used in optoelectronic and photovoltaic systems. The ATRP initiators used, necessary to obtain the PMTM brushes of step a), have been grafted so far, e.g. on silicon oxide (A. Gruszkiewicz, M. Stowikowska, G. Grzes, A. Wójcik, J. Rokita, A. Fiocco, M. Wytrwal-Sarna, M. Marzec, B. Trzebicka, M. Kopec, K. Wolski, S. Enhancement of the growth of polymer brushes via ATRP initiated from ions-releasing indium tin oxide substrates, Eur. Polym. J. 112 (2019) 817-821. https://doi.org/10.1016/j.eurpolymj.2018.11.004), zinc oxide (see: A. Pomorska, K. Wolski, M. Wytrwal-Sarna, A. Bernasik, S. Polymer brushes grafted from nanostructured zinc oxide layers - Spatially controlled decoration of nanorods, Eur Polym. J. 112 (2019) 186-194. https://doi.org/10.1016/j.eurpolymj.2019.01.012), titanium oxide (G. Panzarasa, G. Soliveri, K. Sparnacci, S. Ardizzone, Patterning of polymer brushes made easy using titanium dioxide: Direct and remote photocatalytic lithography, Chem. Commun. 51 (2015) 7313-7316. https://doi.org/10.1039/c5cc00255a) and the photoiniferter molecules used for the preparation of PSSNa chains were grafted on the surface of silicon oxide (M. Stowikowska, K. Wolski, A.J. Wójcik, D. Wesner, H. Schönherr, S. Unraveling the nanomechanical properties of surface-grafted conjugated polymer brushes with ladder-like architecture, Polym. Chem. 11 (2020) 7050-7062. https://doi.org/10.1039/d0py01422b.) and quartz (M. Szuwarzynski, K. Wolski, A. Pomorska, T. Uchacz, A. Gut, L. Lapok, S. Zapotoczny , Photoactive Surface-Grafted Polymer Brushes with Phthalocyanine Bridging Groups as an Advanced Architecture for Light-Harvesting, Chem. - A Eur. J. 23 (2017) 11239-11243. https://doi.org/10.1002/chem.201702737).

It has been shown in the literature that the application of the SI-ATRP and SI-PIMP polymerization conditions developed for the preparation of brushes on the indium tin oxide surface can be successfully used for the synthesis of these brushes on other oxide substrates (see A. Gruszkiewicz, M. Stowikowska, G. Grzes, A. Wójcik, J. Rokita, A.

Fiocco, M. Wytrwal-Sarna, M. Marzec, B. Trzebicka, M. Kopec, K. Wolski, S. Zapotoczny, Enhancement of the growth of polymer brushes via ATRP initiated from ions-releasing indium tin oxide substrates, Eur. Polym. J. 112 (2019) 817-821. https://doi.org/10.1016/j.eurpolymj.2018.11.004; M. Szuwarzynski, K. Wolski, A. Pomorska, T. Uchacz, A. Gut, L. Lapok, S. Zapotoczny, Photoactive Surface-Grafted Polymer Brushes with Phthalocyanine Bridging Groups as an Advanced Architecture for Light-Harvesting, Chem. - A Eur. J. 23 (2017) 11239-11243. https://doi.org/10.1002/chem.201702737).

For a better explanation of the invention, the present description has been illustrated by the figures.

Fig. 1 shows a scheme of the synthesis of two-component polymer nanobrushes. SI-ATRP polymerization of the bifunctional monomer (A), parent brushes with side functional groups (e.g. thiophene) (B), degrafting of the parent polymer brushes (C), replacement of end groups with stable nitroxides (D), grafting of photoiniferter particles to vacant sites between the parent chains (E), SI-PIMP polymerization of the SSNa monomer and obtaining the two-component system (F), template (matrix) polymerization of the side groups in the parent brushes to produce conjugated two-component brushes (G).

Fig. 2 shows a scheme of a two-step reaction to obtain an ATRP initiator attached to an ITO surface.

Fig. 3 shows a scheme of a one-step reaction to obtain an ATRP initiator attached to an ITO surface.

Fig. 4 shows a scheme of the synthesis of PMTM brushes using the SI-ATRP method.

Fig. 5 shows the AFM photomicrographs together with the cross-sectional profiles of the PMTM brushes after: A) SI-ATRP polymerization, B) degrafting step (PMTM_80, Example 6), C) generating PSSNa chains and obtaining two-component polymer brushes (m_PMTM_80, Example 11), D) oxidative polymerization of two-component brushes (c_m_PMTM_80, Example 14).

Fig. 6 shows the FTIR spectrum of the brushes: A) PSSNa obtained with SI-PIMP (PSS_SI-PIMP), B) PMTM obtained with SI-ATRP (PMTM_SI-ATRP), C) two-component mixed brushes with predicted PMTM content of 40% (m_PMTM_40) and D) m_PMTM_40 two-component brushes subjected to oxidative polymerization (c_m_PMTM_40).

Fig. 7 shows a scheme of the synthesis of PMTM brushes using the metal-free SI-ATRP method.

Fig. 8 shows the FTIR spectra of the PMTM brushes after different reaction times with a TBAF solution.

Fig. 9 shows the dependence of the carbonyl band intensity (from FTIR spectra) for PMTM brushes on the time of their reaction with TBAF.

Fig. 10 shows a scheme of the substitution of reactive end groups with stable nitroxyl radicals.

Fig. 11 shows the FTIR spectra of the ITO plate after the step: A) modification with ATRP initiator and B) reaction with 4-hydroxy-TEMPO. C) 4-hydroxy-TEMPO spectrum collected on an ATR accessory.

Fig. 12 shows a scheme of grafting reaction of photoiniferter molecules.

Fig. 13 shows a scheme of grafting of PSSNa chains.

Fig. 14 shows the topography and an exemplary height profile of (reference) PSSNa homopolymer brushes.

Fig. 15 shows the dependence of the layer thickness of the PSSNa reference brushes on the SI-PIMP polymerization time.

Fig. 16 shows the theoretical IR spectra obtained in order to determine the percentage composition of the brushes m_PMTM_82.

Fig. 17 shows the calibration curves obtained on the basis of theoretical IR spectra for mixed brushes showing the absorbance ratios of the bands at the given wavenumbers for: A) m_PMTM_40, B) m_PMTM_62, C) m_PMTM_82.

Fig. 18 shows the XPS spectra of S2p before and after sputtering measured for the brushes: A) m_PMTM_82, B) m_PMTM_62. C) m_PMTM_40.

Fig. 19 shows AFM measurements maps of surface topography (top) and adhesion (bottom) of the samples: A), A1) m_PMTM_82, B), B1) m_PMTM_62, C), C1) m_PMTM_40.

Fig. 20 shows schematically the conformational changes of PMTM and PSSNa chains during SI-PIMP polymerization of SSNa monomer in two-component brushes.

Fig. 21 shows AFM photomicrographs of the surface topography and the adhesion maps of: m_PMTM_82 brushes measured in water (A), (A1) and toluene (D), (D1); m_PMTM_62 brushes measured in water (B), (B1) and toluene (E), (E1); m_PMTM_40 brushes measured in water (C), (C1) and toluene (F), (F1).

Fig. 22 shows the AFM photomicrographs of the surface topography and the adhesion maps of the two-component brushes (expected surface composition of 54% of PMTM and 46% of PSSNa) after: synthesis (A), (A1), storage under vacuum for 2 h (B), (B1), washing with toluene (C), (C1). All measurements were made on dried layers. The scale of adhesion is non-linear and has been selected to obtain the greatest possible contrast between the domains for better visualization of changes.

Fig. 23 shows the results of XPS profiling of the m_PMTM_85 brushes. A) Graph showing the percentage of sulfur atoms in thiophene and $SO_3^{2-}$ groups and indium. B) XPS spectra of the sulfur S2p after a particular sputtering cycle.

Fig. 24 shows the results of SIMS profiling showing the changes in the intensity of signals from the thiophene ($C_4S$) and styrenesulfonate ($C_6H_5SO$) groups of the m_PMTM_62 brushes before (A) and after the oxidative (template) polymerization of the thiophene side groups in the PMTM (B) chains.

Fig. 25 shows maps obtained by nanoIR microscopy, surface topography (A) and absorption of IR radiation of a wavenumber of 1735 cm$^{-1}$ (B) of a mixed brush with a composition similar to the m_PMTM_40 sample after removal from the vacuum. Surface topography map (C) and absorption of IR radiation of a wavenumber of 1735 cm$^{-1}$ (D) of the same sample after washing with demineralized water.

Fig. 26 shows a template polymerization of the side thiophene groups in the PMTM chains.

Fig. 27 shows the UV-VIS spectrum of the c_m_PMTM_40 brushes.

Fig. 28 shows AFM photomicrographs of surface topography and adhesion maps measured for mixed brushes after template polymerization: A), A1) c_m_PMTM_40, B), B1) c_m_PMTM_62, C), C1) c_m_PMTM_82.

Fig. 29 shows the AFM photomicrographs of the surface topography and the adhesion maps of c_m_PMTM_40 brush measured: A), A1) in air, B), B1) in toluene, C), C1) in demineralized water.

Fig. 30 shows the current-voltage characteristics for: A) c_m_PMTM_62 brushes, B) c_m_PMTM_62 brushes after doping with FeCl$_3$ (c_m_PMTM_62_d), C) PMTM homobrushes, D) PEDOT:PSS Al4083 layer.

Fig. 31 is a schematic diagram of the circuit used for the PEDOT:PSS and mixed brushes in the XY plane (horizontal direction) conductivity measurements.

Fig. 32 is a schematic diagram of the circuit used for the PEDOT:PSS and mixed brushes in the vertical direction conductivity measurements.

Fig. 33 shows the current-voltage characteristics (current flow perpendicular to the layer) made for: A) c_m_PMTM_62 brushes, B) PEDOT:PSS Al4083 layer.

Fig. 34 is a schematic diagram of the circuit used for conductivity measurements with a conductive atomic force microscope.

Fig. 35 shows the current-voltage curves collected with a conductive atomic force microscope.

Fig. 36 shows: A) UPS spectrum of sample c_m_PMTM_60. B) Energy diagram based on UPS measurements,

$E_{vac}$ is electron energy level in vacuum above the sample surface, the distance between $E_F$ and $E_{vac}$ levels is the work function of the material (2.9 eV), the distance between the HOMO and $E_F$ levels is the barrier to electron hole injection (2.1 eV).

Fig. 37 shows the current-voltage characteristics (horizontal direction) made for c_m_PMTM_62_d after: A) washing off the residual doping agent in methanol and nitromethane, B) exposing the brushes to air and room light for 45 minutes.

The following examples are intended to illustrate the implementation of the invention in a non-limiting manner.

**Examples**

**Example 1. Synthesis of 3-methylthiophenylmethacrylate (MTM)**

A solution of freshly distilled methacrylic acid chloride (5.6 mL, 57.9 mmol) dissolved in 40 mL of diethyl ether was added dropwise, under argon, at 0 °C, to a solution of 3-thiophenomethanol (5 mL, 52.6 mmol), triethylamine (11 mL, 78.9 mmol) and copper (I) chloride (50 mg, 0.5 mmol) in 40 mL of diethyl ether, while keeping the temperature not exceeding 5 °C. The reaction was carried out for 30 minutes at 0 °C, then warmed to room temperature and left overnight. The precipitate of triethylamine hydrochloride was filtered off, the solvent was evaporated. The obtained residue was dissolved in 65 mL of dichloromethane, to which 65 mL of 2M sodium hydroxide was then added and stirred for 3 hours under an inert gas atmosphere at room temperature. Extraction in dichloromethane/distilled water was carried out, after which the organic phase was dried over anhydrous magnesium sulfate. The solvent was evaporated and the resulting yellow oil was distilled under reduced pressure in the presence of hydroquinone to give 6.1 g (33.5 mmol, 64% yield) of 3-methylthiophenylmethacrylate.

**Example 2. Functionalization of ITO surface with ATRP initiator (two-step synthesis)**

The ITO plate was placed for 1 hour in a solution of 30% ammonia mixed with perhydrol in a volume ratio v:v = 1:1 at 50 °C. The plate was then pulled out, rinsed with copious amounts of distilled water, tetrahydrofuran and toluene and placed in a flask filled with 10 mL of toluene. 50 $\mu$L of (3-aminopropyl)triethoxysilane was added dropwise to the flask under argon and was isolated from light. After 24 hours, the plate was removed from the vessel and rinsed copiously with toluene and dichloromethane, and then placed in a flask containing a solution of 0.4 mL of triethylamine in 10 mL of distilled dichloromethane. A solution of 0.37 mL of 2-bromoisobutanoic acid bromide in 2 ml of dichloromethane was added dropwise to the flask under argon. After reacting for 1 hour, the plate was in sequence pulled out, rinsed with copious amounts of dichloromethane and methanol, and dried under a stream of argon. The scheme of the synthesis is shown in Fig. 2.

**Example 3. Functionalization of ITO surface with ATRP initiator (one-step synthesis)**

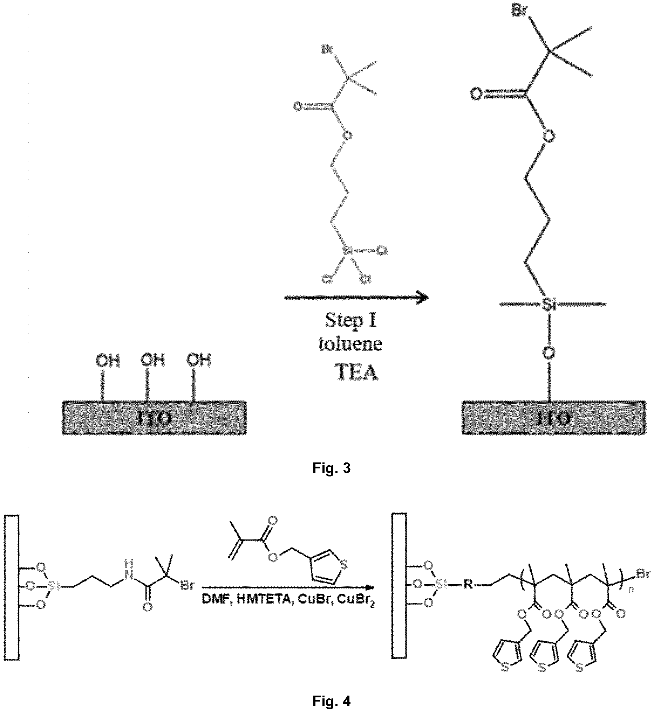

The ITO plates were washed in ethanol and then sonicated for 10 min in the same solvent. At this time, the plates were washed again with ethanol and dried under a stream of argon. In the next step, the substrates were placed for 30 minutes in the UV Ozone Cleaner device generating ozone as a result of the use of high-energy UV light. Finally, they were washed off with copious amounts of ethanol and then with toluene from a wash bottle. The cleaned ITO plates were placed in a 100 mL flask, into which 20 mL of anhydrous toluene was introduced, then the flask was tightly closed with a septum and additionally secured with parafilm©. The flask was purged with argon for approx. 10 min. After this time, 5 $\mu$L of initiator (3-(trichlorosilyl)propyl (2-bromo-2-methylpropanoate) was injected and after approx. 2 min 30 $\mu$L of triethylamine (TEA) was injected. In order to mix all added reagents, the system was intensively purged with argon for another 5 minutes. The flask with the plates was left to react for 24 h. After this time, the plate was washed with a stream of toluene, sonicated for 1 minute in this solvent, re-treated with toluene and dried with argon. A diagram of an initiator grafting is shown in Fig. 3.

Alternatively, the initiator of Examples 2 and 3 may be grafted in an analogous manner using other oxide substrates. Optimally, the oxide substrates should be cleaned prior to modification with an ozone generator in order to generate more surface hydroxyl groups involved in the initiator attachment process.

**Example 4. Preparation of poly(3-methylthiophenylmethacrylate) (PMTM) brushes by the SI-ATRP method**

A solution of 0.9 mg (0.004 mmol) of copper (II) bromide, 2.4 mL of N,N-dimethylformamide, 42 $\mu$L (0.15 mmol) of 1,1,4,7,10,10-hexamethyltriethyltetramine and 0.6 mL (4 mmol) of 3-methylthiophenylmethacrylate was prepared.

This solution was then transferred to a bottle containing 6 mg (0.04 mmol) of copper (I) bromide under argon. The content of the vessel was stirred until the salt was completely dissolved and then heated to 70 °C. After 5 minutes, the prepared reaction mixture was transferred to a flask containing the ITO plate bearing the monolayer of the initiator of Example 2. The polymerization was carried out for 30 minutes at 70 °C in an anaerobic atmosphere and terminated with the addition of 10 mL of N,N-dimethylformamide. After withdrawal, the plate was rinsed copiously with N,N-dimethylformamide, then sonicated for 5 minutes in tetrahydrofuran, dichloromethane and toluene and dried under a stream of argon. The brush synthesis scheme is shown in Fig. 4 (see also general scheme in Fig. 1 A and B).

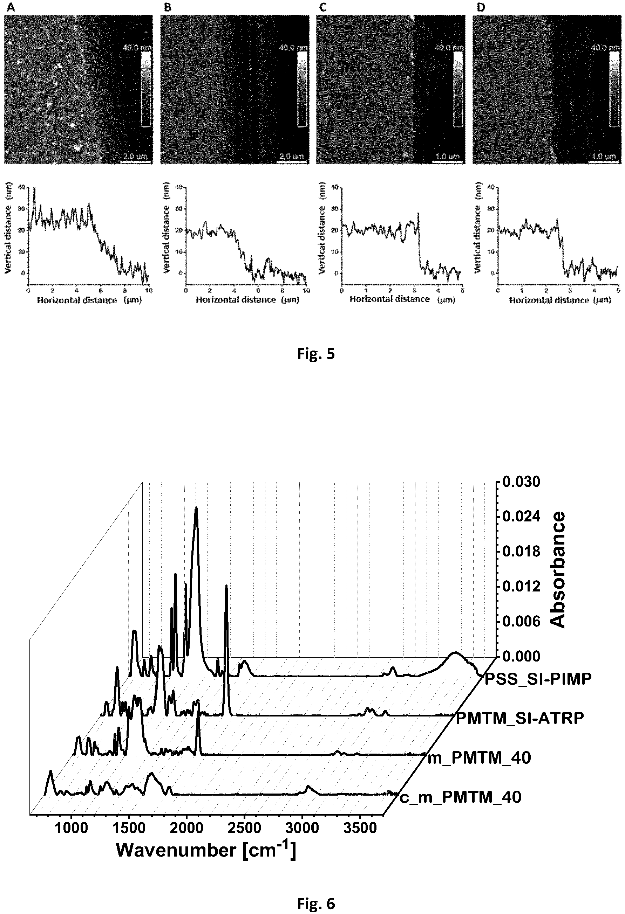

The thickness of the obtained PMTM brushes was examined with the Dimension ICON atomic force microscope (Bruker) operating in the PeakForce QNM mode. The ScanAsyst-Air probe was used for the measurements. To measure the thickness of the layer, the brushes were scratched with metal tweezers or a needle (removing the polymer without disturbing the substrate) and then washed off by sonication in toluene for 5 min. The thickness of the layer was measured at the border of the scratch formed. Fig. 5A shows an exemplary AFM topography with a cross-sectional profile showing the thickness of the brushes obtained after 30 min of polymerization. Thicker layers of PMTM brushes of the order of 80 nm, according to the state of knowledge (see: K. Wolski, A. Gruszkiewicz, M. Wytrwal-Sarna, A. Bernasik, S. The grafting density and thickness of polythiophene-based brushes determine the orientation, conjugation length and stability of the grafted chains, Polym. Chem. 8 (2017) 6250-6262), was obtained with a longer polymerization time, i.e. 180 min. The chemical structure of the obtained layers was confirmed by FTIR spectroscopy (Fig. 6). All FTIR measurements of the polymer brushes were carried out using a Nicolet IS10 spectrometer equipped with a "grazing-angle" accessory for measuring thin polymer films. Characteristic bands from the thiophene group were observed: 3105 cm$^{-1}$ (=C-H stretching vibrations), 1485 cm$^{-1}$ (C=C stretching vibrations in the thiophene ring), 788 and 694 cm$^{-1}$ (out-of-plane vibrations of the thiophene ring); ester group: 1150 cm$^{-1}$ (C-O stretching vibrations), 1730 cm$^{-1}$ (C = O stretching vibrations).

### Example 5. Preparation of poly(3-methylthiophenylmethacrylate) (PMTM) brushes by the metal-free SI-ATRP method

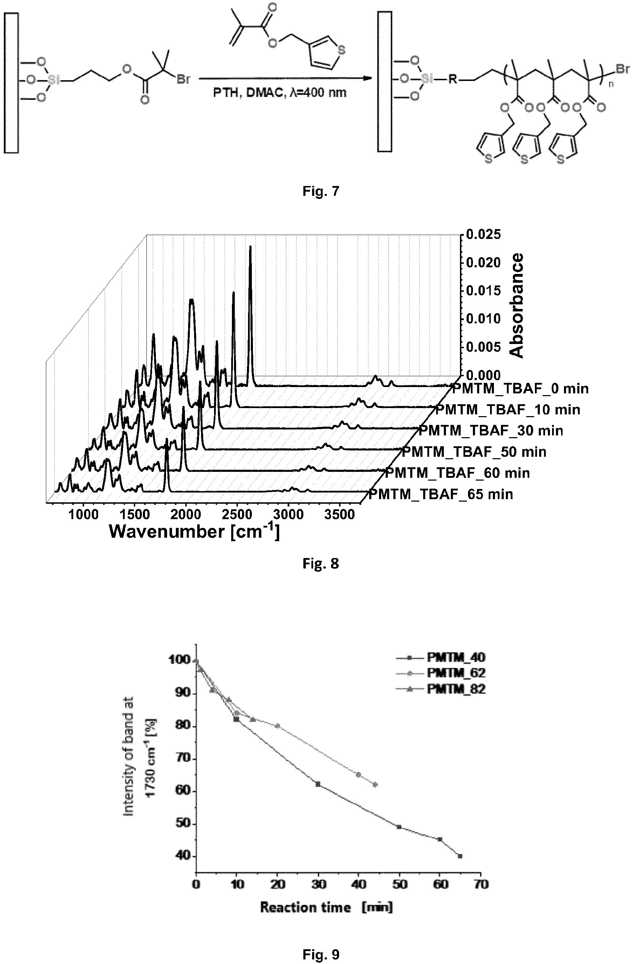

20 mg/mL solution of N-phenylphenothiazine (PTH) in DMAC and a solution of MTM monomer in DMAC, respectively, were prepared in two dark vials (Fig. 7). Each of the prepared solutions was mixed and purged with solvent vapors under a continuous argon flow. Then, 30 $\mu$L of the PTH/DMAC solution was withdrawn with a microliter syringe and injected into the vial containing the monomer. The resulting polymerization solution (molar ratio PTH:MTM = 1:100) was purged with argon for a further 10 min with stirring. Using a syringe, 20 $\mu$L or 180 $\mu$L of the prepared polymerization solution were collected and spotted on a square ITO plate (dimensions: 15 $\times$ 15 mm, volume of the mixture - 20 $\mu$L) or rectangular plate (dimensions: 25 $\times$ 75 mm, volume of the reaction mixture - 180 $\mu$L) modified with the initiator of Example 3, placed on a piece of paper, on the table top. Then, using laboratory forceps, a cover glass with dimensions of 18 $\times$ 18 mm was placed on an ITO plate with dimensions of 15 $\times$ 15 mm, or 40 $\times$ 90 mm on an ITO plate with dimensions of 25 $\times$ 75 mm with a polymerization solution and the whole was placed in a LED photoreactor emitting light with a wavelength of 400 nm. The process was carried out at room temperature. After 3 hours, the radiation source was disconnected, the coverslip was removed and the plate was washed in an ultrasonic cleaner in DMAC. It was then treated with a stream of toluene and sonicated for 5 minutes in this solvent. It was finally washed with toluene and dried under an argon stream. The obtained layers were characterized in the same way as in Example 4.

The PMTM brushes of Examples 4 and 5 can also be prepared on other ATRP initiator modified oxide substrates (following the procedure of Examples 2 and 3) using the above procedure.

### Example 6. Degrafting of PMTM brushes

Plates coated with poly(3-methylthiophenylmethacrylate) brushes (Examples 4 and 5) were immersed in a 1M solution of tetrabutylammonium fluoride (TBAF) in tetrahydrofuran at room temperature. The reaction time was adjusted to the desired grafting density. In the case of the brushes of Example 4, the reaction was carried out from 15 to 65 minutes (depending on the planned degree of degrafting), while for the brushes of Example 5 it was about 180 minutes (conditions for mixed brushes where the expected PMTM content is 60%) due to the lower reaction speed. After pullout, the plate was rinsed copiously with tetrahydrofuran, sonicated in this solvent for 3 min, then rinsed with toluene and dried under argon. As a result of this step, layers with reduced grafting density and starting polymer content were obtained (Fig. 1C). The percentage of polymer content was determined by IR spectroscopy and AFM measurements. For further synthesis steps, PMTM brushes containing 40% (PMTM_40), 62% (PMTM_62) and 82% (PMTM_82) of the starting polymer chains were used. The cleavage kinetics of the brushes of Example 4 were investigated by FTIR spectroscopy by observing the variation in carbonyl band intensity at a wavelength of 1730 cm$^{-1}$ (Fig. 8 and 9). The layer thicknesses after the degrafting step were examined by AFM microscopy as in Examples 4 and 5 and are presented in Table 1.

Degrafting can also be carried out in the case of brushes grafted onto other oxide substrates. If the substrate used does not reflect IR radiation, the degrafting process can be followed with good accuracy by measuring the layer thickness by spectral ellipsometry or by AFM microscopy.

**Table 1.** Thicknesses of the initial PMTM ($h_{PMTM}$) brushes and these brushes after degrafting with TBAF ($h_{TBAF}$) and the growth of PSSNa brushes and formation of mixed ($h_{mixed}$) brushes together with the determined molar ratio of chains and weight of PMTM and PSS polymers in mixed systems.

| Sample | $h_{PMTM}$ (nm) | $h_{TBAF}$ (nm)a | $h_{mixed}$ (nm) | Relative absorbance of the carbonyl band after reaction with TABF[b] (%) | Molar ratio of PMTM/PSSNa[c] chains | Molar ratio of PMTM/ PSSNa[d] |
|---|---|---|---|---|---|---|
| m_ PMTM_40 | 28 ± 2 | 11 ± 1 (39%) | 12 ± 1 | 40 | 43/57 | 52/48 |
| m_ PMTM_62 | 22 ± 2 | 15 ± 1 (68%) | 16 ± 1 | 62 | 73/27 | 82/18 |
| m_ PMTM_82 | 21 ± 1 | 18 ± 1 (85%) | 18 ± 1 | 82 | 87/13 | 86/14 |
| m_ PMTM_85 | 25 ± 2 | 20 ± 1 (80 %) | 35 ± 2 | 85 | 85/15 | 55/45 |

[a] the percentage of the layer thickness after the reaction with TABF in comparison with the initial layer thickness of the PMTM brushes before the degrafting process is written in brackets
[b] relative absorbance of the band at 1730 cm$^{-1}$ in relation to the initial absorbance before the degrafting reaction
[c] determined from XPS measurements for mixed brushes (after removing the top layer by spraying argon clusters)
[d] determined from FTIR measurements

**Example 7. Substitution of reactive end groups with stable nitroxyl radicals**

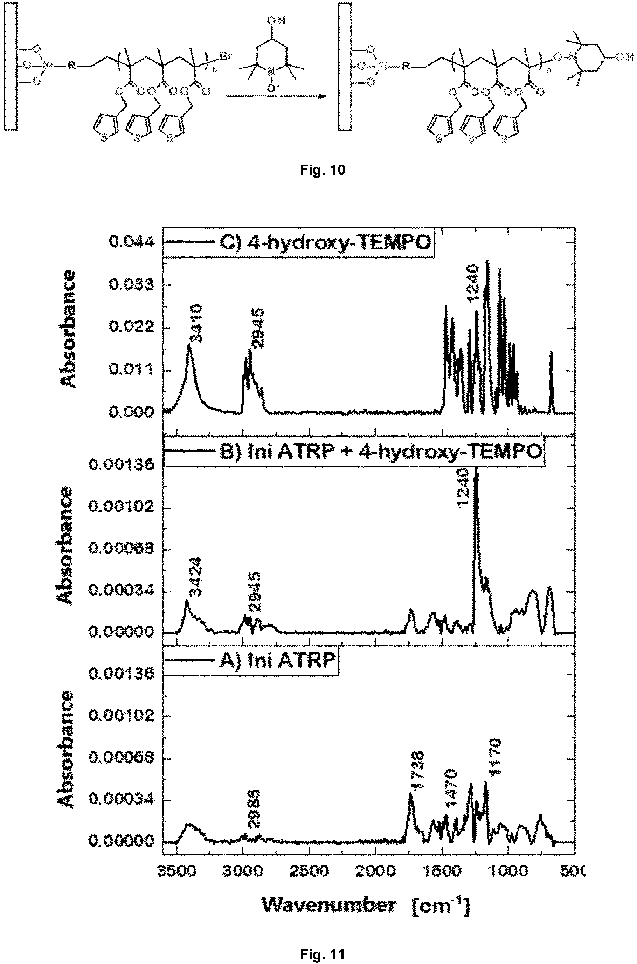

A solution of 330 μL (0.08 mmol) of *N,N,N',N'',N''*- pentamethyldiethyltriamine was prepared in 8.4 mL of *N,N*-dimethylformamide, which was transferred under an argon stream into a bottle containing 63 mg (0.44 mmol) of copper (I) bromide. The contents of the vessel were stirred until the salt was completely dissolved and then transferred over the plates covered with degrafted PMTM brushes of Example 6. The previously prepared solution of 35 mg (0.3 mmol) of 4-hydroxy-2,2,6,6-tetramethylpiperidine-1-oxyl (4-hydroxy-TEMPO) in 0.3 ml *N,N*-dimethylformamide was then added to the bottle. The reaction was carried out for 1 hour at 70 °C (or 2 hours at 60 ° C for metal-free SI-ATRP brushes) in an anaerobic atmosphere, then the plate was pulled out, rinsed copiously with *N,N*-dimethylformamide, tetrahydrofuran, toluene and dried under a stream of argon. A scheme for the substitution of end groups is shown in Fig. 10 (see also general scheme in Fig. 1D).

To confirm the end group protection reaction by stable nitroxides, FTIR spectra of the APTES-BIB initiator monolayer (Example 2) were obtained before and after the reaction with 4-hydroxy-TEMPO (Fig. 11). Performing this type of analysis for brushes was not possible due to the too small share of end groups in the entire polymer layer, which resulted in the signal from end groups being covered by signals from PMTM brushes. However, the structure of the end group in the initiator molecules and at the chain ends is analogous and has a similar reactivity. The spectrum collected for the plate after the modification step with the ATRP initiator (Example 3, Fig. 11A) confirms the covalent bonding of the initiator to the sample, due to the presence of the alkyl groups: 2985 cm$^{-1}$ (C-H stretching vibration), 1470 cm$^{-1}$ (vibrational deformation of $CH_2$ and $CH_3$ groups) and ester groups: 1738 cm$^{-1}$ (C=O stretching vibrations), 1170 cm$^{-1}$ (C-O stretching vibrations). After the reaction with 4-hydroxy-TEMPO, apart from the bands from the ATRP initiator, the appearance of the characteristic bands from 4-hydroxy-TEMPO was observed (Fig. 11 B): 3424 cm$^{-1}$ (O-H stretching vibrations), 2945 cm$^{-1}$ (C-H stretching vibrations in the TEMPO ring) and 1240 cm$^{-1}$ (C-O stretching vibration), which was also observed for pure 4-hydroxy-TEMPO (Fig. 11C). The high intensity of the band at 1240 cm$^{-1}$ additionally proves the formation of new C-O bonds as a result of the reaction of N-O* radicals with carboradicals located on the initiator molecules (formed after breaking the bromine atom in the reaction with the copper complex). All the observed changes confirm the course of the reaction according to the scheme shown in Fig. 10.

Example 8. Grafting of photoiniferter particles into vacant sites in **PMTM** brushes

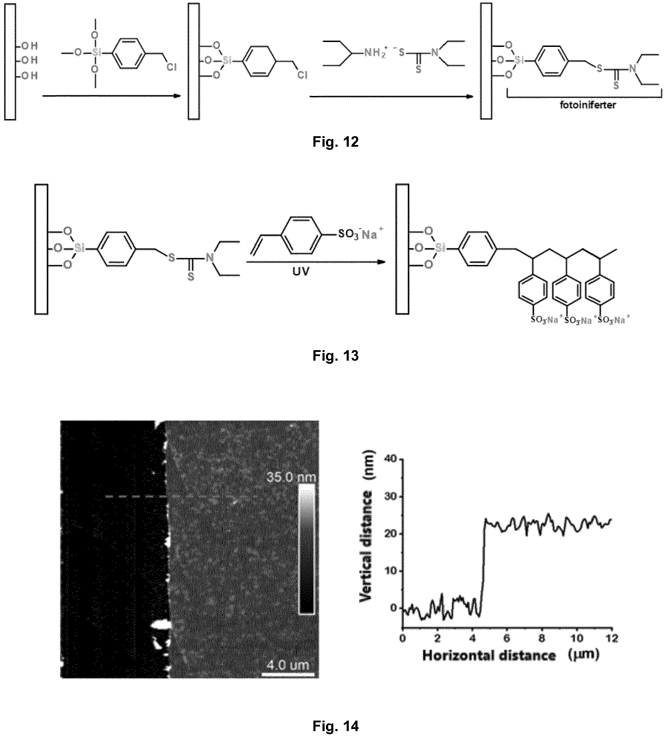

The grafting of photoiniferter molecules into vacant sites between PMTM brushes (Fig. 12 and Fig. 1E) was performed analogously to the procedure for the synthesis of homopolymer brushes. However, this type of procedure has not previously been used to graft photoiniferter molecules between previously grafted polymer chains, and is therefore non-obvious and novel. It would be expected that the steric hindrances associated with the presence of already grafted macromolecules prevent both the deposition of initiator molecules on the surface and the subsequent growth of polyelectrolyte macromolecules.

The plate covered with degrafted PMTM brushes with end groups protected with 4-hydroxy-TEMPO molecules was immersed in a bottle containing 10 mL of toluene. 50 $\mu$L (0.2 mmol) of p-(chloromethyl)phenyltrimethoxysilane was then added to the flask under an anaerobic atmosphere and left overnight at room temperature under limited light. After this time, the plate was rinsed copiously with toluene, tetrahydrofuran and dried under a stream of argon. A solution of 5.5 mg (0.02 mmol) of diethylamine diethylthiocarbamate in 5 mL of tetrahydrofuran was then introduced into the flask with the plate thus prepared. The reaction was carried out overnight at room temperature under limited light, after which the plate was rinsed copiously with tetrahydrofuran, water and toluene, in which it was also sonicated for 10 minutes. After washing, the surface was dried under an argon stream.

Alternatively, photoiniferter particles may be grafted using the above procedure into vacant sites in PMTM brushes obtained on other oxide substrates.

## Example 9. Grafting of PSSNa chains and preparation of two-component brushes

For the synthesis of two-component systems based on PMTM brushes, two PSSNa chain grafting procedures were developed (Fig. 13 and Fig. 1 F). In one of them, SI-PIMP was polymerized in milliliter volumes of reagents (mixed systems based on PMTM brushes synthesized by the SI-ATRP method of Example 4), and in the second, microliter volumes of reagents were used (mixed systems based on PMTM brushes synthesized by metal-free SI- ATRP, Example 5) pointing to the possibility of modifying large surface substrates with minimal use of reagents. Both developed methods are not obvious and have not been used so far to graft PSSNa chains towards homopolymer brushes or multi-component systems. Mixed brushes hereinafter will be abbreviated as m_PMTM_XX (where XX is the expected mole percent of PMTM chains in mixed brushes which is equal to the percentage of remaining PMTM chains after the degrafting step).

### Procedure using milliliter volumes

The samples with grafted photoiniferter particles (Example 8) were placed in a glass photopolymerization vessel that cut off radiation at a wavelength lower than 310 nm to graft PSSNa chains (Fig. 13). A solution of 1.2 g of sodium p-styrenesulfonate (SSNa, 5.8 mmol) in 6 mL of distilled water was then transferred to the reaction vessel under a stream of argon. The plate was exposed to light in a Rayonet reactor in the presence of 6 UVB lamps (maximum emission at approx. 300 nm) in an oxygen-free atmosphere. The photopolymerization time was adjusted to obtain the desired degree of polymerization of the PSSNa chains (corresponding to the thickness of the PSSNa brushes of about 20 nm), which was 45-60 min at a light intensity of 6-7 mW/cm$^2$, while in the case of a lower intensity, which was 3-3.5 mW/cm$^2$, the polymerization time was 120 min. After completion of the reaction, the plate was rinsed copiously with water, tetrahydrofuran and methanol. In order to determine the length of the grafted PSSNa chains, the synthesis of homopolymer PSSNa brushes was carried out simultaneously under the same conditions. Fig. 14 shows an exemplary AFM photomicrograph along with the height profile of PSSNa homopolymer brushes obtained after 45 minutes of polymerization. The topography and height profile of exemplary mixed brushes (in this case, m_PMTM_80) is shown in Fig. 5C.

### Procedure using microliter volumes

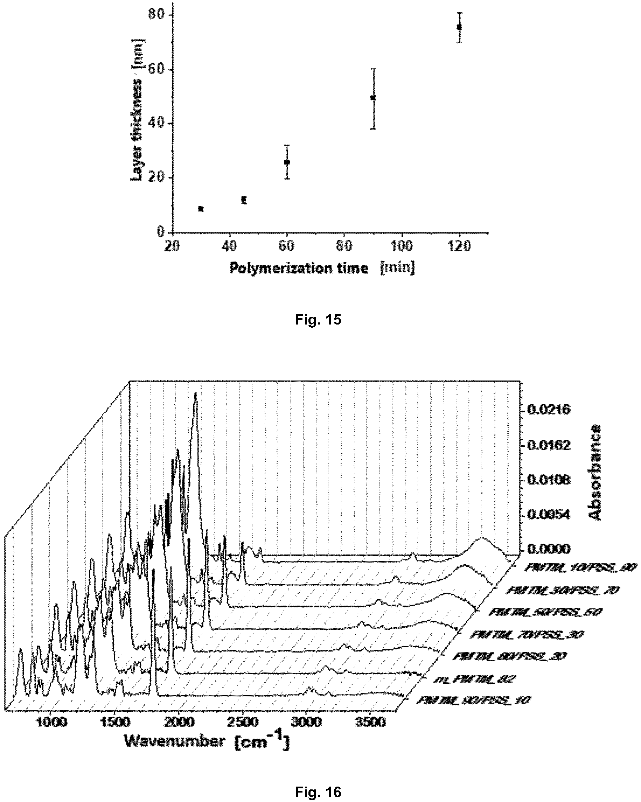

A stock polymerization solution was prepared by dissolving 1.2 g of SSNa in 6 mL of distilled water. Argon was purged thoroughly into the solution to remove oxygen. Then, using a microliter syringe, 50 $\mu$L of the SSNa solution was dripped onto the surface of the sample of Example 8, and then covered with a coverslip, the led lamp (maximum emission at 340 nm, Thorlabs, M340L4) was set at a distance of 2 cm from the sample, and irradiation was started. Polymerization was carried out at room temperature. After an appropriate time (usually 45-60 minutes), the radiation source was disconnected, the coverslip was removed, and the plate was washed with distilled water, then sonicated in H$_2$O, washed with water and methyl alcohol, sonicated in methanol, washed with methanol from a wash bottle and dried in a stream of argon. Fig. 15 shows a graph showing the dependence of the layer thickness of PSSNa homopolymer brushes on the polymerization time used.

PSSNa chains can be grafted using the above procedure into vacant sites in PMTM brushes also obtained on other oxide substrates.

## Example 10. Determination of the molar and weight ratio of PMTM and PSSNa chains in mixed brushes

The two-component brushes of Example 9 were characterized by XPS and FTIR spectroscopy. Comparison of the FTIR spectra of the PMTM homopolymer brushes (Fig. 6 B) and PSSNa (Fig. 6 A) with the two-component systems (Fig. 6 C) indicates the presence of two components. In the spectrum of mixed brushes (Fig. 6 C) the observed IR bands characteristic for PSSNa, i.e. 1229 cm$^{-1}$ (-SO$_2$- stretching vibrations), 1134 cm$^{-1}$ (S=O asymmetric stretching vibrations), 1045 and 1011 cm$^{-1}$ (S=O symmetrical stretching vibrations) and for PMTM 3105 cm$^{-1}$ (=CH stretching vibrations), 1730 cm$^{-1}$ (C= O stretching vibrations), 1485 cm$^{-1}$ (C=C stretching vibrations in the thiophene ring). In order to determine the percentage of PSSNa and PMTM in mixed systems, a series of theoretical IR spectra were generated (Fig. 16) by adding the IR spectrum of 20 nm thick PSSNa homopolymer brushes and the spectra of PMTM homopolymer brushes used for the synthesis of the two-component systems (Table 1) according to Equation 1.

$$S_{th} = S_{PSS20} \cdot \%PSSNa + S_{PMTMhomo} \cdot \%PMTM \qquad [1]$$

$S_{th}$- theoretical spectrum
$S_{PSS20}$- absorption spectrum of reference PSSNa brushes with a thickness of 20 nm
%PSSNa- the percentage of PSSNa
%PMTM- the percentage of PMTM
$S_{PMTMhomo}$- absorption spectrum of homopolymer PMTM brushes used for the synthesis of specific mixed brushes

For example, Fig. 16 shows a series of spectra produced by adding together the spectra of the reference 20 nm PSSNa brushes and the homopolymer PMTM brushes (thickness 20.9 nm, Table 1) used for the synthesis of the m_PMTM_82 dual-component brushes.

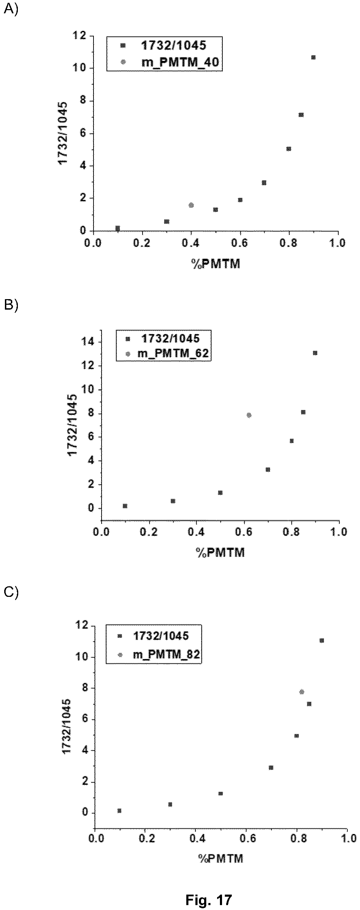

By comparing the absorbance of the IR band coming from the carbonyl groups in PMTM (1730 cm$^{-1}$) with the sulfone group band in PSSNa (1045 cm$^{-1}$), calibration curves were generated showing the dependence of the intensity ratio of these IR bands on the theoretical percentage of PMTM polymer content in mixed brushes (see Fig. 17). The mass contents of individual polymers in the two-component systems (which are presented in Table 1) were determined by comparing the absorbance of the bands from the experimental spectra with the calibration curves.

FTIR measurements showed a slightly higher percentage of PMTM brushes than would be expected from the percentage of chains removed during the degrafting step (Example 6). Thus, grafting of PSSNa chains does not take place at all accessible sites that are free of PMTM chains. However, it must also be taken into account that the IR spectroscopy allows only the determination of the mass ratio of the two polymers on the substrate. The best compliance with the expected composition was achieved for the m_PMTM_82 sample, in which the thickness of the PMTM brushes used for the synthesis of mixed brushes was the closest to the reference PSSNa brushes. Therefore, the weight ratio of PSSNa and PMTM in this case will be the closest to the molar ratio. In order to determine the molar ratio of the PSSNa and PMTM chains, XPS measurements of the mixed brushes were carried out. All XPS measurements in this patent application were performed with a PHI VersaProbeII spectrometer (ULVAC-PHI, Chigasaki, Japan). For XPS studies, Al K$\alpha$ x-rays (1486.6 eV) focused on a 100 $\mu$m spot were used. Scanning was performed in the 400 $\mu$m $\times$ 400 $\mu$m area. The photoelectron beam angle was 45° and the analyzer transition energy was set to 46.95 eV to obtain high energy resolution spectra for the regions C1s, O1s, S2p, Na1s. To maintain a constant surface potential of the sample, regardless of the conductivity of the sample, two-beam charge compensation was used with Ar$^+$ ions of 7 eV and electrons of 1 eV. All XPS spectra were corrected for the C1s peak of non-functionalized saturated carbon (C-C) at 284.8 eV. The deconvolution of the spectra was performed using the PHI MultiPak software (v.9.9.0.8). The background spectrum was subtracted by the Shirley method. Table 2 shows the percentages of individual elements. In the case of the S2p spectra, a deconvolution was performed that allowed the determination of the molar ratio of PMTM units (S2p, C-S, peak maximum at 163.9 eV) and PSSNa (S2p, C-SO3, peak maximum at 168.3 eV). The first 2p3/2 peak at 163.9 eV indicates the presence of S-C bonds characteristic for the thiophene groups, while the second one at 168.3 eV is characteristic of the SO$_3^{2-}$ groups in PSSNa.

**Table 2.** XPS measurement results for mixed brushes

| Sample | C1s | **O1s** | Na1s | S2p, C-S | S2p, **C-SO$_3$** | **mol%PMTM** |
|---|---|---|---|---|---|---|
| m_PMTM_82 | 70.2±0.8 | 22.2±0.8 | 0.5±0.1 | **2.5±0.5** | **4.6±0.6** | **35±7** |
| m_PMTM_62 | 71.7±1.9 | 21.2±1.4 | 0.5±0.1 | **2.9±0.6** | **3.7±0.6** | **44±9** |
| m_PMTM_40 | 71.3±1.5 | 21.5±1.0 | 0.4±0.5 | **2.6±1.0** | **4.2±1.1** | **38±14** |

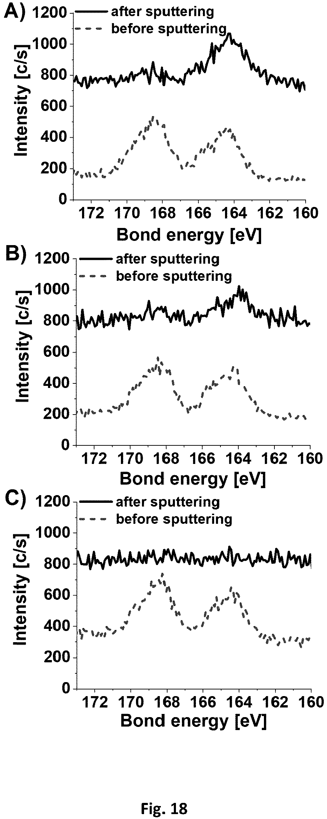

When analyzing Table 2, it can be seen that a good agreement of the molar ratio was obtained only for the m_PMTM_40 brushes. For slightly thicker brush layers m_PMTM_82 and m_PMTM_62, the calculated PMTM molar percentages are much lower and badly correlated with the expected values. This is due to the penetration depth of the photoelectron beam in the XPS, which is approx. 10 nm. The outer layer of mixed brushes has been shown to be enriched with PSSNa chains under high vacuum conditions (see Example 11). Therefore, in order to obtain the molar ratio of PMTM and PSSNa chains, it is necessary to determine the percentage of chains at the ITO/brush interface. Thus, additional measurements were made after the thin layer of brushes had been removed first (Fig. 18) and thus the molar ratios of the chains on the surface were calculated (Table 3). Analyzing Table 3, it can be seen that the determined molar percentage of PMTM chains is only slightly higher than the expected value, which confirms the high efficiency of the developed synthesis methodology. In the case of the m_PMTM_40 sample, the applied argon cluster sputtering conditions caused almost the entire layer to die, therefore the determined molar percentage is burdened with greater uncertainty. However, in the case of the m_PMTM_40 sample, the mole percent of PMTM chains determined before and after sputtering are almost the same due to the low layer thickness (approx. 12 nm) comparable to the penetration depth of photoelectrons.

**Table** 3. XPS measurement results of samples after sputtering,

| Sample | S2p C-S/S2p C-SO$_3$ | Mol % PMTM |
|---|---|---|
| m_PMTM_82 | 6.67 | 87 |
| m_PMTM_62 | 2.64 | 73 |
| m_PMTM_40 | 0.75 | 43 |

Example 11. Analysis of conformational changes of mixed brushes.

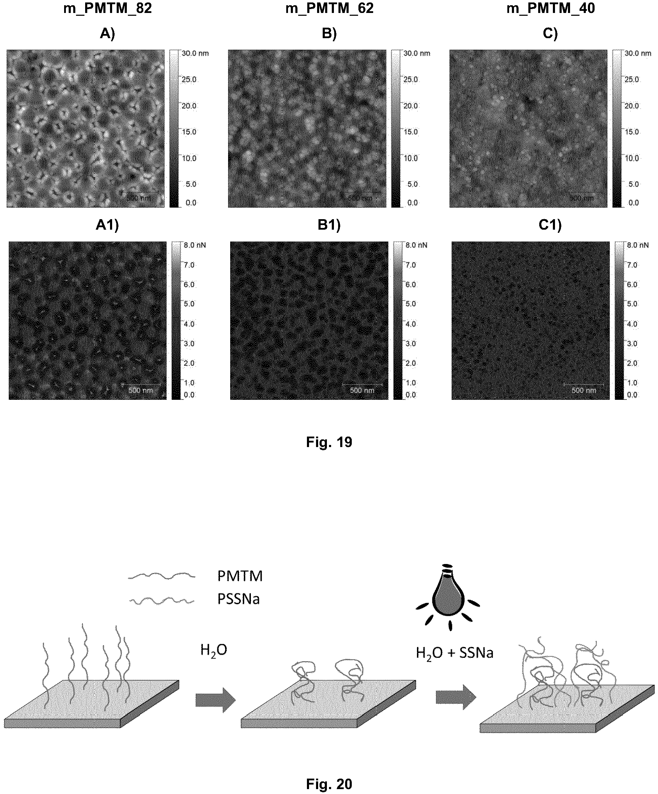

To visualize the surface composition of the obtained mixed brushes, an AFM Dimension ICON microscope (Bruker) was used, which uses a special measurement mode (PeakForce QNM) that allows for simultaneous monitoring of the surface topography and mechanical properties of the sample. ScanAsyst-Fluid probes were used for measurements, and photomicrographs were collected with a resolution of 512 x 512 pixels in various environments (air, water, toluene). Fig. 19 shows AFM photomicrographs of the surface topography of two-component polymer brushes with the corresponding adhesion maps. The obtained photomicrographs indicate significant differences in the morphology and mutual spatial distribution of the PMTM and PSSNa chains. Areas with higher adhesion can be assigned to PMTM chains, while areas with lower adhesion to PSSNa chains that have a negative charge, favoring the occurrence of repulsive electrostatic interactions with the AFM probe with a negative surface charge. When analyzing the obtained adhesion maps, it can be seen that with the increase of PSSNa content in mixed systems, the size of domains with higher adhesion characteristic for PMTM decreases. The grafted PSSNa chains form a kind of hoops with the PMTM brushes located inside and outside the PSSNa rim. This is an example of the so-called dimple conformation that has been observed in the art for other mixed systems. The presence of this unique structure is also the result of the synthetic procedure used. The grafting of the PSSNa chains takes place in an aqueous solution in which the hydrophobic PMTM chains are insoluble and form globular domains between which free space for PSSNa chains is formed (Fig. 19).

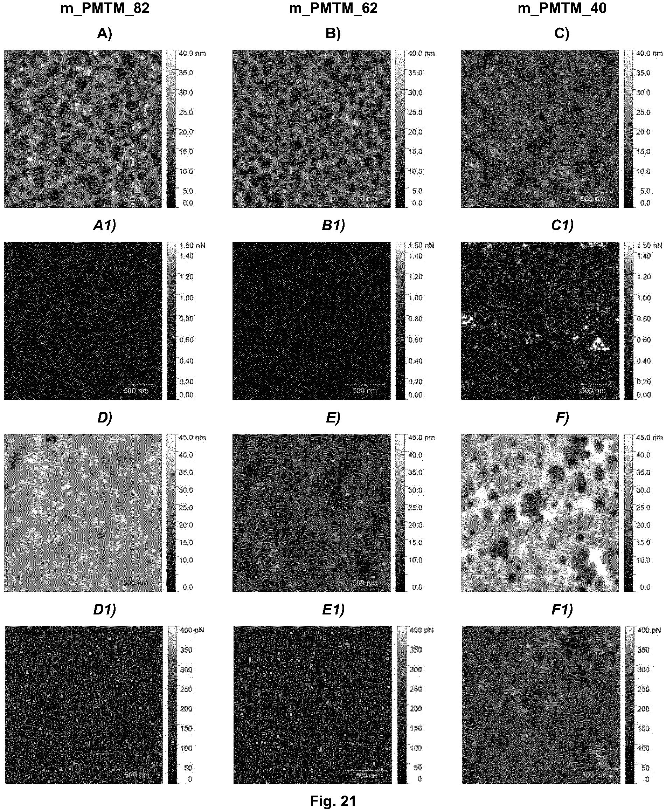

The resulting mixed brushes consist of two polymers with opposite affinity for water and non-polar organic solvents. In order to investigate structural changes in brushes in various chemical environments, AFM measurements were performed in water - a selective solvent for PSSNa, and in toluene - a selective solvent for PMTM. AFM measurements were performed using a Dimension Icon microscope (Bruker) operating in the PeakForce QNM mode. Measurements were made at constant pressure of the probe to the substrate (1.5 nN). As in the case of air measurements, the ScanAsyst-Fluid probe was used. AFM measurements carried out in water proved the migration (conformation change) of the PSSNa chains to the brushes tip, which correlates with their annular structure predicted from measurements in air. This is especially noticeable for samples m_PMTM_82 (Fig. 21 A, A1) and m_PMTM_62 (Fig. 21 B, B1). The diameter of the PSSNa rings is larger in the case of m_PMTM_82. The parent PMTM brushes with higher grafting density (as in the m_PMTM_82 sample) are predicted to form larger domains, which also translates into larger diameter of the PSSNa rings. In the case of m_PMTM_40 brushes, PSSNa forms less regular domains and occupies larger spaces on the surface of the samples due to the significant surface dilution of the parent PMTM brushes used for the synthesis of two-component systems.

On the other hand, immersion of the test samples in toluene resulted in the adoption of an erect conformation by the PMTM chains, which are in the upper layer of mixed brushes under these conditions (see Fig. 21 D-F). The phase separation in this case is most noticeable for the m_PMTM_40 sample (Fig. 22 F, F1), which is inter alia related to the largest starting thickness of the PMTM parent brushes (longest PMTM chains, Table 1). Moreover, the areas occupied by PSSNa (lower parts) are noticeably larger and less regular than the samples with higher PMTM content. The m_PMTM_82 and m_PMTM_62 samples took a similar conformation under these conditions compared to the air measurements, but the PSSNa ring structures decreased and became slightly less noticeable (Fig. 21D, D1, E, E1). The AFM

EP 4 198 063 A1

measurements clearly show that the most regular structures and the best mixing of PMTM and PSSNa occur in samples with a higher starting content of PMTM. High grafting density of PMTM chains promotes the maintenance of a more regular conformation of these polymers when grafting PSSNa chains in water, while low grafting density (as in the case of m_PMTM_40) favors the formation of less regular domains due to the large spaces between PMTM chains.

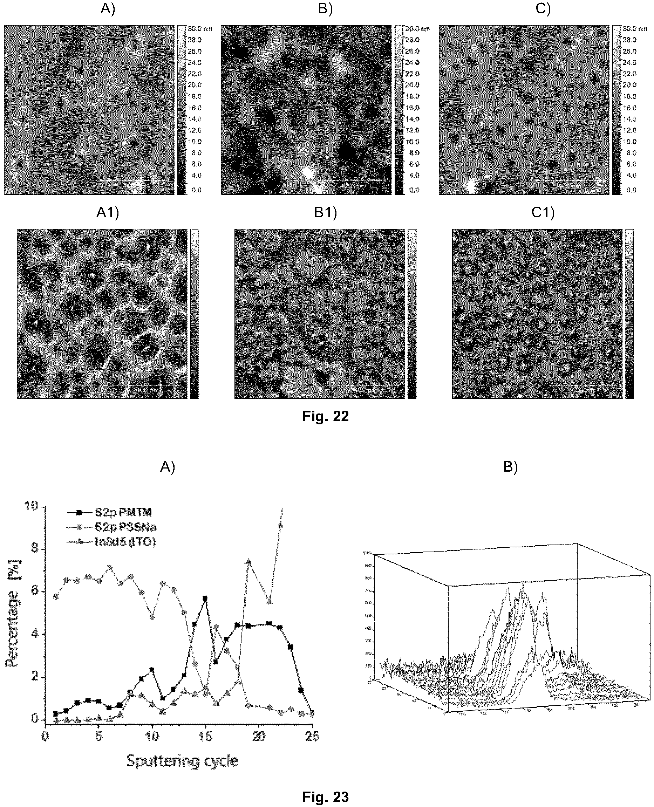

It has been shown that the topography and conformation of the PSSNa and PMTM chains depend on the "sample treatment history". Fig. 22 shows photomicrographs of the surface topography of mixed brushes with the expected surface composition of 54% PMTM and 46% PSSNa after: synthesis (Fig. 22 A), two hours of vacuum storage (Fig. 22 B) and washing with toluene (Fig. 22 C). All photomicrographs were collected in the air for dried films. Analyzing Fig. 22, it can be seen that the mixed brushes after vacuum storage are enriched in PSSNa in the near-surface layer due to the repulsive electrostatic interactions between the mers. This observation also explains the inflated PSSNa percentages in the case of XPS measurements without removal of the top layer (Table 2), which are performed under high vacuum conditions. Washing the same sample with toluene and drying with argon causes a conformation change, which indicates the enrichment of the surface layer with PMTM chains.

In order to confirm the observations from the AFM analysis, XPS profiling was performed for the m_PMTM_85 mixed brush (Fig. 23, Table 1), in which the grafted PSSNa chains had a longer length than in the case of other samples, which was evidenced by a significant increase in the layer thickness after the PSSNa chain grafting step. The conditions that were used to graft PSSNa (polymerization time 120 minutes, light intensity ~7 mW/cm$^2$) resulted in the preparation of PSSNa homobrushes with a thickness of 70-80 nm. This is confirmed by the weight ratio of PMTM to PSSNa (from FTIR measurements), which can be estimated at 55/45, which indicates that PSSNa chains are several times longer than PMTM, assuming the expected molar ratio of grafted chains (85/15). The signal from sulfur (S2p) was analyzed in detail. The XPS profiles (Fig. 23) clearly indicate the accumulation of PSSNa in the upper regions of the layer due to the longer length of the PSSNa chains and the high vacuum conditions. However, as one approaches the polymer/ITO interface, the percentage of PMTM increases and at the interface itself corresponds to the expected PMTM / PSSNa molar ratio, i.e. 85/15. Moreover, between cycle 13 and 17, there is a transitional moment where there is most likely significant phase separation.

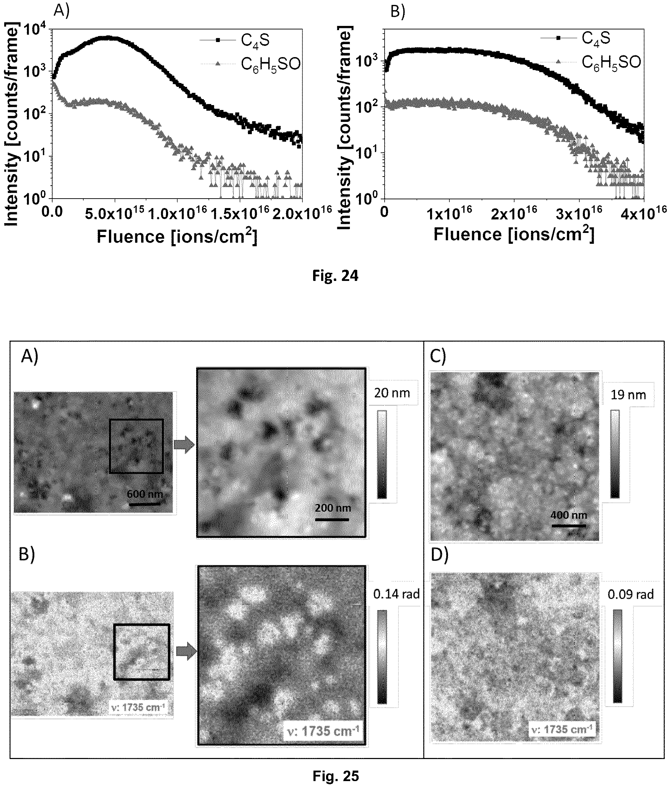

Profiling using secondary ion mass spectrometry (SIMS) was performed on the IONTOF TOF-SIMS V instrument (Munster, Germany), equipped with a bismuth-manganese ion source and a low-energy cesium ion cannon. To obtain depth-dependent composition profiles, the samples were sprayed with a low-energy Cs ion beam (500eV 20nA) over an area of 500x500 $\mu$m, revealing successive layers of film. The surface developed in the crater center was analyzed with a focused beam of bismuth ions concentrated on the area of 150 $\mu$m $\times$ 150 $\mu$m. SIMS profiling performed for the m_PMTM_62 sample characterized by similar PSSNa and PMTM chain lengths also confirms migration (chain stretching) of PSSNa towards the top of the layer under high vacuum conditions (Fig. 24 A).

The same conclusions can be drawn from the analysis of mixed brushes using the nanoIR microscopy technique (Fig. 25), which, with a resolution of several nanometers, allows to determine the position of individual components of the mixed system.

NanoIR imaging was performed using a near-field scattering microscope (neaSNOM, neaspec.com) equipped with a tunable laser (MIRCAT, Daylight Solutions). IR radiation attenuated to a few mW of power was focused with a parabolic mirror on a metallized AFM measuring probe (NCPt, nanoandmore.com) which scanned the sample. As a result of scanning, images of surface topography and a map of absorption and reflection in the range of IR radiation with a surface resolution of about 20 nm are obtained simultaneously. The acquisition time was 9 ms per pixel, and the images were acquired with a resolution of 300x300 pixels.

After removal from the vacuum, the mixed brush shows a clear phase separation due to the migration of the PSSNa chains to the top of the layer, the signal from the PMTM chains (IR absorption at 1735 cm$^{-1}$, Fig. 25 B) is enhanced in the "holes". Washing the layer with demineralized water causes relaxation of the entire structure and homogeneous distribution of PSSNa and PMTM chains (Fig. 25 C and D) similar to washing with toluene (Fig. 22 C and C1).

**Example 12. Template polymerization of side thiophene groups in PMTM brushes and preparation of conjugated two-component brushes**

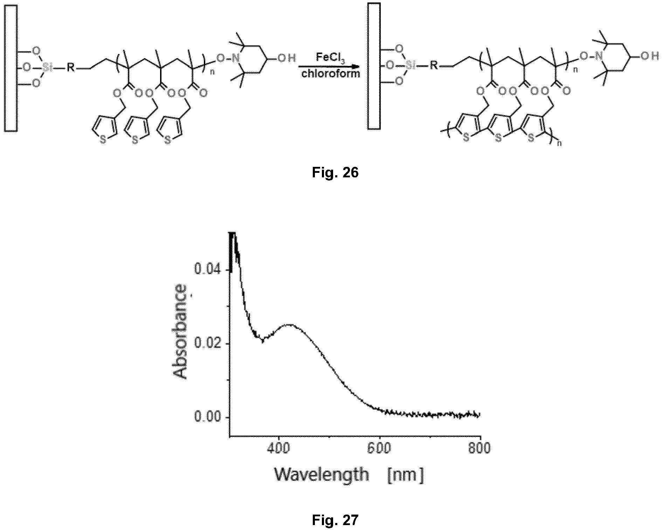

The ITO plate coated with the two-component brushes of Example 9 was placed in a glass holder in an amber bottle containing 20 mg FeCl$_3$ (0.12 mmol) and a magnetic stirrer. The bottle was closed with a rubber septum, purged with argon, placed in an ice bath on a magnetic stirrer, and 10 mL of anhydrous chloroform were added under an inert atmosphere. The reaction was carried out for 1 h in an ice bath, stirring the contents of the bottle on a magnetic stirrer without access to light, and then it was allowed to react for 24 h in a refrigerator (temperature 4 °C). After this time, the whole was warmed to room temperature and allowed to react for another 24 h. Upon completion, the bottle was transferred to the glove box, and the plate with the grafted brushes was washed abundantly with chloroform and methanol from a wash bottle. For even better washing, the plate was placed in a bottle with chloroform and methanol, into which an argon hose was introduced, generating gas bubbles breaking on the cleaned surface of the plate. Upon completion, the sample was dried under an argon stream. All the above activities were carried out without the access of visible light. Brushes with conjugated chains will hereinafter be referred to as c_m_PMTM_ (XX) (e.g. c_m_PMTM_40). The scheme for polymerization of the pendant thiophene groups is shown in Fig. 26 (see also general scheme in Fig. 1G).

The polymerization of the side thiophene groups was confirmed by IR measurements and UV-VIS spectroscopy. The measurements showed the disappearance of the band at 3105 cm$^{-1}$ (Fig. 6 D) originating from the C-H stretching vibrations and the appearance of a new broad band at approx. 1560 cm$^{-1}$ originating from the C=C stretching vibrations in the polythiophene chain. Due to the reorganization in the structure of the mixed brush, a decrease in band intensity was observed at 1735 cm$^{-1}$, most probably caused by a change in the orientation of the C=O group with respect to the substrate. The UV-VIS spectrum of mixed brushes grafted onto the ITO surface was measured in transmission with a Varian Cary 50 spectrophotometer. The UV-VIS differential spectrum (obtained by subtracting the spectrum of mixed brushes before template polymerization from the spectrum of brushes after template polymerization) also indicates the generation of conjugated chains that due to the presence of an absorption band at a wavelength with a maximum at 430 nm (Fig. 27).

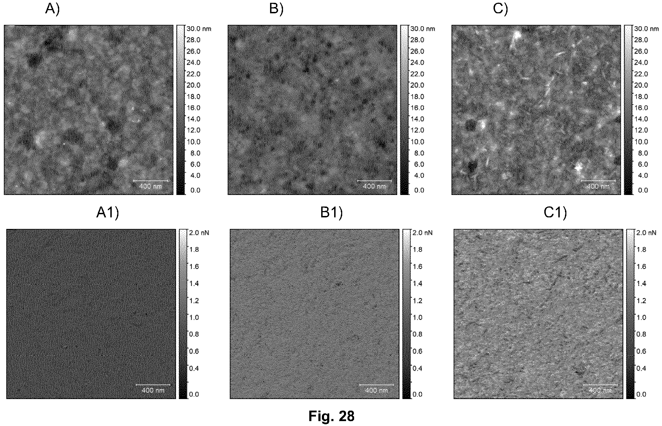

The surface topography, which did not show phase separation of the PSSNa and PMTM chains, also changed significantly (Fig. 28). This is evidenced by the collected adhesion maps, which indicate a good mixing of both types of chains. Negatively charged PSSNa chains interact less with the negatively charged AFM probe tip. Therefore, the value of the adhesion forces recorded for the tested samples is the greater the smaller the share of PSSNa in mixed systems (see Figs. A1, B1 and C1). Thus, the highest adhesion forces were observed for the c_m_PMTM_82 sample.

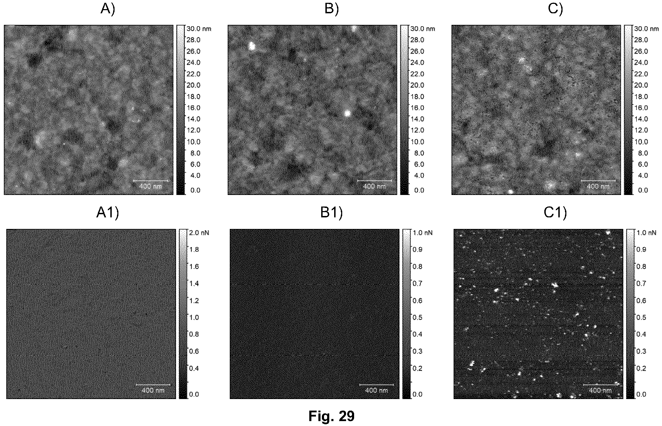

In order to investigate the surface dynamics in mixed systems after generating the conjugated PMTM chains, the c_m_PMTM_40 brush topography was analyzed in a different chemical environment as in Example 11. After immersion in toluene, the c_m_PMTM_40 surface topography did not change as evidenced by the adhesion map (Fig. 29 B, B1) showing no domains with different affinity for the AFM probe. After immersion in water, the topography changed slightly (Fig. 28 C, C1) and the obtained adhesion map indicates the presence of very small domains with higher adhesion. However, the observed changes are incomparably less than for the samples of Example 11 (Fig. 21). It has been shown in the art that conjugate brushes obtained by template polymerization exhibit ladder-like structures that are characterized by low conformational freedom. Therefore, the surface dynamics in the obtained two-component brushes can be controlled or completely limited by the generation of PMTM chains with a rigid, ladder-like structure. Moreover, the template polymerization conditions can lead to the generation of positive charges on the conjugated PMTM chains, which can be stabilized by negatively charged PSSNa chains. It therefore leads to an increase in the forces of interaction between PSSNa and PMTM, which is necessary to obtain self-doping systems.

The conclusions from the AFM measurements perfectly confirm the results of the SIMS profiling (Fig. 24), which indicate an even distribution of the PMTM and PSSNa chains over the entire thickness of the layer after the template polymerization stage, even under high vacuum conditions. The demonstrated possibility of controlling the mutual spatial distribution of two types of polymers and "freezing" their conformations is innovative and not obvious. This is important in the context of obtaining intelligent coatings with switchable properties for applications, e.g. in chemical sensors.

**Example 13. Characteristics of the electric properties of the conductive two-component brushes.**

PEDOT:PSS is the most widely used polymer mixture in organic electronics, which could replace classic inorganic conductors in many applications in the future. Unfortunately, thin PEDOT:PSS layers show about 3 orders lower conductivity in the perpendicular (vertical) direction to the layer surface (which is important for many applications) than along the layer (horizontal direction). This is due to the specific orientation of both polymers. PEDOT has been shown to form ellipsoidal particles that are separated from each other by weakly conductive PSS chains. The distances between the particles, however, are greater in the direction perpendicular to the surface of the film, which results in a decrease in conductivity in that direction. In the case of mixed polymer nanobrushes, both the PMTM and PSSNa chains are perpendicularly oriented towards the substrate, which results in an increase in the efficiency of charge transport in this direction compared to transport in the horizontal direction.

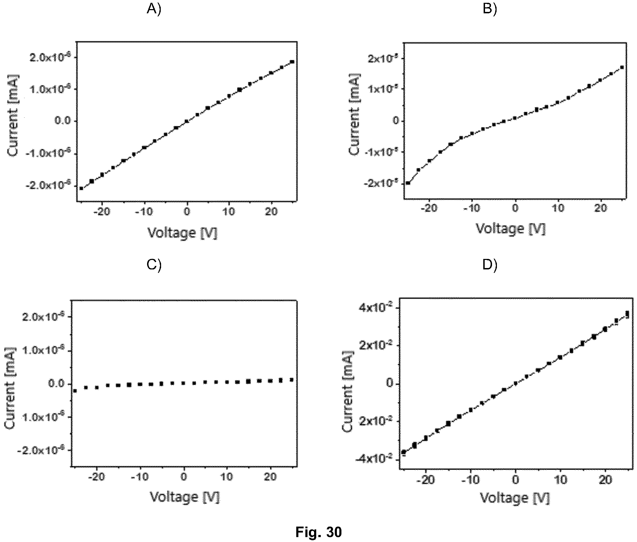

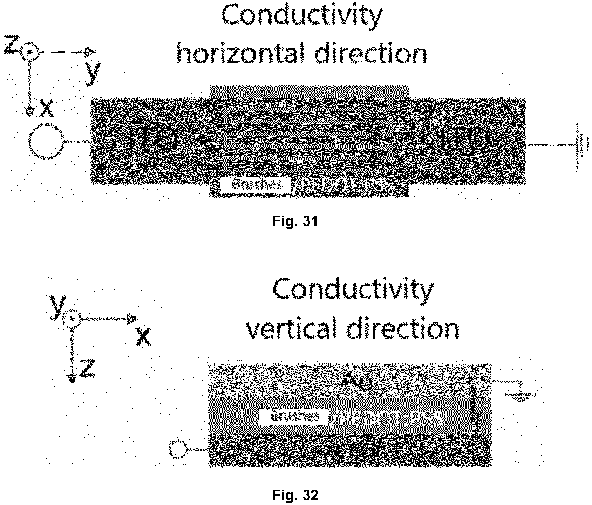

The c_m_PMTM_62 brushes were used to measure the conductivity. In order to measure conductivity in the XY plane (horizontal direction), mixed brushes were made on S161 type chips with ITO electrodes (Ossila), which are used to construct organic field effect transistors. The mixed brush synthesis procedure was exactly the same as for the regular ITO substrates. As a reference, conductive layers based on PEDOT:PSS AI4083 (Heraeus GmbH, Germany), which were prepared according to the procedure described below, were used. The S161 chips were immersed sequentially in acetone and 2-isopropanol and sonicated in each of the solvents. Then they were subjected to the action of oxygen plasma in order to remove residual organic dirt. The aqueous PEDOT:PSS AI4083 mixture was filtered through a syringe filter with a pore size of 0.45 $\mu$m. Then, the PEDOT:PSS AI4083 layer was applied to the previously cleaned chips using a spin-coater, 3000 rpm. The obtained PEDOT:PSS thin film (40 nm thick) was subjected to heating at 120 °C for 20 min in order to remove residual water. The current-voltage characteristics (Fig. 30) were measured under an inert atmosphere with a Keithley 2400 measuring source. A schematic of the measurement setup is shown in Fig. 31.

The obtained current-voltage characteristics indicate a higher conductivity of the PEDOT:PSS layers in the horizontal direction ($\sigma_h \approx 6*10^{-2}$ S/m, Fig. 30 D) than undoped brushes c_m_PMTM_62 ($\sigma_h \approx 7*10^{-6}$ S/m, Fig. 30 A). However, the obtained conductivity of c_m_PMTM_62 turned out to be about an order of magnitude higher than the undoped PMTM homobrushes (Fig. 30C), indicating the self-doping effect of the obtained two-component systems.

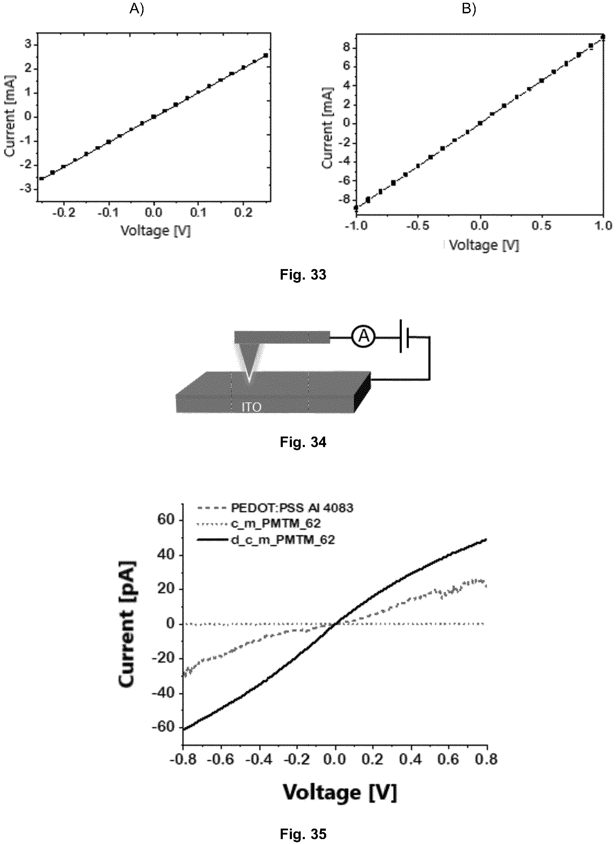

Macroscopic measurements of conductivity in the vertical direction ($\sigma_v$) were made for c_m_PMTM_62 brushes and PEDOT:PSS Al4083 layers grafted/embedded on S211 (Ossila) chips used for the construction of organic photovoltaic cells. In this case, 100 nm thick silver electrodes were sputtered onto the sample surface and the conductivity was measured according to the diagram in Fig. 32. The current-voltage characteristics (Fig. 33) were measured under an inert atmosphere with a Keithley 2400 measuring source.

The slopes of the curves measured for the c_m_PMTM_62 brushes and the PEDOT:PSS Al 4083 layer were comparable, which translated into the specific conductivities of the order of $\sigma_v = 7\cdot10^{-5}$ S/m. According to the available data, the conductivity of the well-conducting PEDOT:PSS layer perpendicular to the substrate should be approx. $10^{-3}$ - $10^{-2}$ S/m. The same measurements carried out for the even more conductive PEDOT:PSS HTL solar layer (Ossila) resulted in obtaining the same values. Therefore, it was found that the applied methodology, due to high contact resistances, allows to determine the conductivity of layers with specific conductivity lower than $7\cdot10^{-5}$ S/m. Therefore, it can be concluded that the conductivity of c_m_PMTM_62 mixed brushes in the direction perpendicular to the substrate is not less than $7\cdot10^{-5}$ S/m, which means at least 10 times higher conductivity ($\sigma_v/\sigma_h = 10$) in the direction perpendicular to the substrate compared to parallel direction. These results indicate a significant anisotropy of the conductivity of the synthesized mixed systems.

PEDOT in commercially available PEDOT:PSS suspensions is highly oxidized, and the positive charges located on the conjugated chains are stabilized by PSS. The reduction of PEDOT in the PEDOT:PSS mixture to the basic state results in a decrease in the conductivity of the PEDOT:PSS layers by as much as 6-7 orders of magnitude. In the case of mixed brushes, the conjugated PMTM chains are not oxidized after the template polymerization stage and are present in their basic form, therefore their conductivity is much lower than the PEDOT:PSS layers. Therefore, in order to generate positive charges on the PMTM chains, the c_m_PMTM_62 brushes were further oxidized in a mixture of nitromethane and iron (III) chloride (concentration 1 mg/mL). For this, the c_m_PMTM_62 sample was immersed in a solution of iron (III) chloride in nitromethane for 1 hour at room temperature. After this time, the plate was taken out and purged intensively with argon, blowing off the excess solution (henceforth the sample will be designated c_m_PMTM_62_d). Measurements in the XY plane were made for the brushes grafted on the S161 chips according to the diagram in Fig. 32. However, in order to assess the conductivity in the direction perpendicular to the substrate, a conductive atomic force microscope was used. The scheme of the measurement setup is shown in Fig. 34. Measurements were made with a Dimension ICON microscope (Bruker) in the PeakForce TUNA measurement mode. The PF TUNA probes with a nominal lever spring constant of 0.4 N/m and a needle tip radius of 25 nm were used for the measurements. In order to assess the conductivity of the c_m_PMTM_62_d brushes and the PEDOT:PSS Al4083 layers, current-voltage curves were collected in several places, applying the pressure of the probe to the substrate ensuring a stable electrical contact. Exemplary current-voltage curves are shown in Fig. 35.

Analyzing Fig. 34, it can be seen that the slope of the current-voltage curve for the brushes c_m_PMTM_62_d is greater than for the PEDOT:PSS Al4083 layers, which proves the high conductivity of the obtained mixed systems. The specific conductivity of PEDOT:PSS Al 4083 and the c_m_PMTM_62_d brushes were calculated from the formula below (Equation 2).

$$\sigma = \frac{1}{R} \cdot \frac{l}{S} \qquad\qquad [2]$$

1/R- reciprocal of the resistance corresponding to the slope of the current-voltage curve [A/V] l - layer thickness [m] S- AFF needle contact area with the sample [$m^2$] calculated from Equation 3.

$$S = 2\pi rh \qquad\qquad [3]$$

r- radius of the needle tip [m]
h- penetration depth [m]

Due to the higher thickness of the PEDOT:PSS layer (~40 nm), the calculated conductivity values for c_m_PMTM_62_d and PEDOT:PSS Al 4083 are similar and are respectively $8,9*10^{-3}$ S/m and $8,6*10^{-3}$ S/m. The measured value for PEDOT:PSS Al 4083 is comparable to the conductivity values reported in the prior art for the PEDOT:PSS layers with the same composition, which confirms the correctness of the measurements carried out. In order to investigate the conductivity anisotropy of the c_m_PMTM_62_d sample, macroscopic conductivity measurements in the horizontal direction were also performed (Fig. 30 B). As expected, the conductivity value of doped mixed brushes increased in relation to the undoped layers and amounted to $\sigma_h = 5*10^{-5}$ S/m. Comparing the measured values of the conductivity in the vertical and horizontal directions for the c_m_PMTM_62_d sample, it can be easily noticed that the conductivity in the vertical direction is almost 180 times higher ($\sigma_v/\sigma_h$ = 178) than in the horizontal direction. These results confirm a very high conductivity anisotropy of the synthesized layers. The ratio of vertical to horizontal conductivity in the case of PEDOT:PSS AI 4083 ($\sigma_v/\sigma_h$ = 0.14) indicates a much higher conductivity in the horizontal direction (inverse relationship than for brushes). It is worth noting that analogous conductivity measurements for poly(3-methylthiophene) brushes obtained by surface-initiated Kumada catalyst transfer polymerization and doped with $FeCl_3$ showed comparable vertical and horizontal conductivity of these layers (no anisotropy). Thus, the conductivity anisotropy of the mixed brushes described herein is unique and related to the spatial distribution of the PMTM and PSSNa chains. In the resulting two-component brushes, the PMTM chains are flanked by PSSNa, so the conjugated polymer chains are grouped into small domains separated by weakly conductive PSSNa. As a result, the horizontal conductivity cannot reach such high values as in the PEDOT:PSS films. Moreover, it has been shown that the ladder structure of conductive brushes obtained with template polymerization promotes intramolecular, directional transport of charges along single chains in the vertical direction.

## Work function

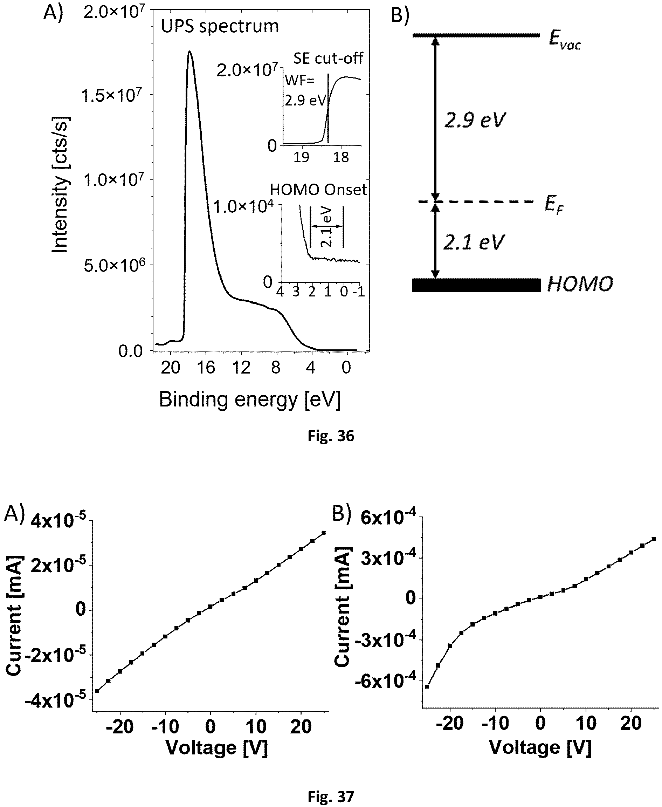

The work function (WF) of commercial PEDOT:PSS layers is 4.7 to 5.4 eV, which makes them good electron hole transporting layers. Measurements of the work function of the obtained mixed brushes were carried out using ultraviolet photoelectron spectroscopy (UPS). Measurements were made using a PHI VersaProbeII apparatus (ULVAC-PHI, Chigasaki, Japan). The He I (21.22 eV) line from the UHV discharge lamp was used for UPS measurements. An acceleration potential of -5 V was used, which led to a much clearer cut-off of the secondary electrons (SE cut-off). The work function (measured as the difference between the photon energy and the SE cut-off position) and the barrier to electron hole injection (given as the difference between the Fermi energy level of the substrate and the material's HOMO orbital) were measured by a UPS. Measurement times were kept as short as possible to prevent UV degradation of the test materials. Fig. 36 shows the UPS spectrum measured for the c_m_PMTM_62 brushes. The performed measurements allow to determine the location of energy levels and molecular configuration of the material on the basis of: the position of the secondary electron cutoff, SE-cutoff, which can be converted into the work function using the equation WF = hv (21.22 eV) - SE-cutoff. Moreover, the obtained results allowed to determine the position of the HOMO orbital in relation to the Fermi level ($E_f$, Fig. 36 B). To determine the level of the LUMO orbital, the bandwidth energy value was read from the UV-VIS spectrum (2.1 eV, Fig. 27) and added to the HOMO position. The Fermi level in this case was found to be very close to the LUMO position, which indicates the electronic nature of the conductivity of mixed brushes. UPS measurements showed a record low WF for c_m_PMTM_62 brushes and PMTM parent brushes. These values are comparable to the work function of active metals like calcium.

The WF value for the parent brushes is only 2.3 eV, while for c_m_PMTM_62 WF = 2.9 eV. The $FeCl_3$ doped brushes - c_m_PMTM_62_d show an increased WF value of about 3.6 eV. This suggests that by modifying the molar ratio of the two polymers and oxidizing the PMTM chains, the work function of the interface can be controlled over a very wide range. To the best of our knowledge, such low WF has not yet been achieved with either PEDOT:PSS or any other type of polythiophene-based polymers. So far, the lowest WF values ever reported for any conjugated polymers were 2.4 eV. Therefore, the possibility of regulating the work function in mixed brushes in the range of 2.3 - 3.6 eV is unique and may ultimately lead to the use of the obtained materials as layers selectively transporting electrons in various electrical devices, e.g. photovoltaic cells and organic light-emitting diodes.

## Additional in-plane conductivity measurements

In order to investigate the stabilizing effect of PSSNa on the oxidized form of the conjugated chains, the c_m_PMTM_62_d sample was washed after doping with nitromethane and methanol (good solvents for $FeCl_3$) under anaerobic conditions and subjected to additional conductivity measurements. Removal of residual $FeCl_3$ improved the conductivity of the layer twice in the horizontal direction (Fig. 37 A) indicating good stabilization of the oxidized form of PMTM by PSSNa. Additionally, the influence of air and light on the conductive properties of the obtained layers was investigated. The c_m_PMTM_62_d brushes were exposed to air and oxygen for 45 minutes and the conductivity measurements were repeated. It turned out that the conductivity of the layer unexpectedly increased by an order of magnitude ($1.3*10^{-3}$ S/m, Fig. 37 B), which proves even stronger oxidation of PMTM chains under aerobic conditions (doping) due to the low work function of the obtained layers. This result suggests that the use of a longer doping time (stronger oxidation of PMTM chains as in the case of PEDOT) may allow obtaining even better conductive films.

**Claims**

**1.** Polymer brush grafted from the surface including:

a) electrically conductive substrate,
b) a polymer layer grafted onto this substrate,

**characterized in that** the grafted layer of the polymer brush comprises at least two types of macroparticles: conjugated and polyelectrolyte, which are attached to the substrate.

**2.** Polymer brush according to claim 1, **characterized in that** the conductive substrate is metal oxides with conductive or semiconductive properties, preferably containing a metal oxide selected from the group consisting of: indium tin oxide, silicon oxide, titanium (IV) oxide, zinc oxide, tin (IV) oxide or the mixtures thereof.

**3.** Polymer brush according to claim 1, **characterized in that** the conjugated macromolecule is poly(3-methylthiophenylmethacrylate).

**4.** Polymer brush according to claim 1, **characterized in that** the polyelectrolyte macromolecule is poly(sodium styrenesulfonate).

**5.** Polymer brush according to claim 1, **characterized in that** the molar ratio of conjugated to polyelectrolyte macromolecules ranges from 10:90 to 90:10, preferably from 43:57 to 87:13, respectively.

**6.** Polymer brush according to claim 1, **characterized in that** the thickness of the brushes is from 5 to 100 nm, preferably from 12 to 35 nm.

**7.** Polymer brush according to claim 1, **characterized in that** the conductivity of the brush layer is anisotropic, wherein the conductivity value is higher for the direction perpendicular to the substrate than for the parallel direction.

**8.** Polymer brush according to claim 7, **characterized in that** the ratio of the conductivity in the direction perpendicular to the substrate to the parallel direction is from 10 to 180.

**9.** Polymer brush according to claim 7, **characterized in that** the work function is in the range of 2.3 - 3.6 eV.

**10.** The method of obtaining a polymer brush, **characterized in that** it comprises the following steps:

a) functionalisation of the conductive substrate by a surface initiated reversible deactivation radical polymerization,
b) obtaining brushes whose chains (TYPE1) contain side groups capable of polymerization to form conjugated chains,
c) degrafting of the obtained brushes,
d) deactivation of the reactive end groups of macromolecules as a result of reactions with stable radicals (permanent deactivation of chains),
e) grafting the molecules of surface initiated reversible deactivation radical polymerization (one of them also includes the process with photoiniferter) in the vacant sites in degrafted TYPE1 brushes,
f) grafting of polyelectrolyte chains (TYPE2),
g) template polymerization of side groups in TYPE1 chains.

**11.** The method according to claim 10, **characterized in that** it comprises the following steps:

a) functionalisation of the conductive substrate by means of an atom transfer radical polymerization (ATRP)
b) obtaining poly(3-methylthiophenylmethacrylate) brushes
c) degrafting of poly(3-methylthiophenylmethacrylate) brushes
d) deactivation of reactive end groups by reaction with stable radicals
e) grafting photoiniferter molecules into vacant sites in poly(3-methylthiophenylmethacrylate) brushes
f) grafting of poly(sodium styrenesulfonate) chains
g) template polymerization of side thiophene groups in poly(3-methylthiophenylmethacrylate) brushes.

**11.** The method of obtaining a polymer brush according to claim 10, **characterized in that** the conducting substrate of step a) is a glass plate containing indium tin oxide.

**12.** The method of obtaining a polymer brush according to claim 10, **characterized in that** the atom transfer radical polymerization in step a) is carried out in one step (SI-ATRP or metal-free SI-ATRP).

**13.** The method of obtaining a polymer brush according to claim 10, **characterized in that** the initiator of the atom transfer radical polymerization in step a) is a (3-aminopropyl)triethoxysilane with 2-bromoisobutanoic acid bromide or 3-(trichlorosilyl)propyl (2-bromo-2-methylpropanoate) system.

**14.** The method of obtaining a polymer brush according to claim 10, **characterized in that** the preparation of poly(3-methylthiophenylmethacrylate) brushes in step b) is carried out with the use of copper (I) bromide/copper (II) bromide/N,N-dimethylformamide/1,1,4,7,10,10-hexamethyltriethyltetramine/3-methylthiophenylmethacrylate system or with N-phenylphenothiazine/dimethylacetamide/3-methylthiophenylmethacrylate system.

**15.** The method of obtaining a polymer brush according to claim 10, **characterized in that** step c) is carried out by dipping the plates prepared according to b) into a solution of tetrabutylammonium fluoride in tetrahydrofuran.

**16.** The method of obtaining a polymer brush according to claim 15, **characterized in that** in step c) the degrafting reaction times range from 5 to 180 minutes.

**17.** The method of obtaining a polymer brush according to claim 10, **characterized in that** step d) is carried out by transferring a solution containing *N,N,N',N'',N''*-pentamethyldiethyltriamine in *N,N*-dimethylformamide and copper (I) bromide over the plates prepared in step c), by adding a solution of 4-hydroxy-2,2,6,6-tetramethylpiperidine-1-oxyl in *N,N*-dimethylformamide; wherein preferably the reaction is carried out for 1 to 2 hours at a temperature of 60 to 70 °C in an oxygen-free atmosphere.

**18.** The method of obtaining a polymer brush according to claim 17, **characterized in that** step e) is carried out on plates prepared with p-(chloromethyl)phenyltrimethoxysilane, at room temperature under limited light, and diethylamine diethiocarbamate/tetrahydrofuran system.

**19.** The method of obtaining a polymer brush according to claim 10, **characterized in that** step f) is carried out with milliliter or microliter volumes of the reagents

wherein the use of milliliter volumes of reagents consists in placing the plates prepared in step e) in a glass vessel in a sodium p-styrenesulfonate/water system and irradiation with UVB lamps; the polymerization time ranges from 45 to 120 minutes;
wherein the use of microliter volumes of reagents consists in dropping an aqueous solution of sodium p-styrenesulfonate on the surface of the plate prepared in step e) with a microliter syringe and irradiation with a LED lamp emitting light with a wavelength of 340 nm; the polymerization time ranges from 45 to 60 minutes.

**20.** The method of obtaining a polymer brush according to claim 10, **characterized in that** step g) is carried out with $FeCl_3$ and at temperature of about 4 °C.

**21.** The use of a polymer brush according to claim 1 as a layer that effectively reduces the work function of the modified substrate/electrode.

**Fig. 1**

**Fig. 2**

**Fig. 3**

**Fig. 4**

**Fig. 5**

**Fig. 6**

Fig. 7

Fig. 8

Fig. 9

**Fig. 10**

**Fig. 11**

**Fig. 12**

**Fig. 13**

**Fig. 14**

**Fig. 15**

**Fig. 16**

A)

B)

C)

Fig. 17

Fig. 18

m_PMTM_82          m_PMTM_62          m_PMTM_40
A)                 B)                 C)

A1)                B1)                C1)

Fig. 19

Fig. 20

Fig. 21

A)  B)  C)

A1)  B1)  C1)

**Fig. 22**

A)  B)

**Fig. 23**

**Fig. 24**

**Fig. 25**

**Fig. 26**

**Fig. 27**

A)

B)

C)

A1)

B1)

C1)

Fig. 28

Fig. 29

Fig. 30

Conductivity
horizontal direction

Z
y
x

ITO ITO

Brushes /PEDOT:PSS

**Fig. 31**

Conductivity
vertical direction

y
x
z

Ag

Brushes /PEDOT:PSS

ITO

**Fig. 32**

A)

B)

**Fig. 33**

**Fig. 34**

**Fig. 35**

Fig. 36

Fig. 37

Europäisches
Patentamt

European
Patent Office

Office européen
des brevets

# EUROPEAN SEARCH REPORT

Application Number

EP 22 46 1578

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WOLSKI K. ET AL: "The grafting density and thickness of polythiophene-based brushes determine the orientation, conjugation length and stability of the grafted chains", POLYMER CHEMISTRY, vol. 8, no. 40, 1 January 2017 (2017-01-01), pages 6250-6262, XP093043488, Cambridge ISSN: 1759-9954, DOI: 10.1039/C7PY01418J * abstract, scheme 1 * | 1-21 | INV. C08F112/14 C08F120/38 C08J7/16 C08F292/00 |
| A | LI MINGXIAO ET AL: "Mixed Polymer Brushes for "Smart" Surfaces", POLYMERS, vol. 12, no. 7, 13 July 2020 (2020-07-13), page 1553, XP093043463, CH ISSN: 2073-4360, DOI: 10.3390/polym12071553 * paragraph 2.2, table 1 * | 1-21 | |

TECHNICAL FIELDS
SEARCHED (IPC)

C08F
C08J
C09J

The present search report has been drawn up for all claims

| Place of search | Date of completion of the search | Examiner |
|---|---|---|
| Munich | 2 May 2023 | Degrendel, Magali |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

&: member of the same patent family, corresponding
     document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J.O. ZOPPE ; N.C. ATAMAN ; P. MOCNY ; J. WANG ; J. MORAES ; H.A. KLOK.** Surface-Initiated Controlled Radical Polymerization: State-of-the-Art, Opportunities, and Challenges in Surface and Interface Engineering with Polymer Brushes. *Chem. Rev.,* 2017, vol. 117, 1105-1318, https://doi.org/10.1021/acs.chemrev.6b00314
- **J. KOWAL ; S. ZAPOTLOCZ.** Self-templating surface-initiated polymerization: A route to synthesize conductive brushes. *J. Mater. Chem.,* 2012, vol. 22, 20179-20181, https://doi.org/10.1039/c2jm34480g
- **M. STOWIKOWSKA ; K. WOLSKI ; A.J. WÓJCIK ; D. WESNER ; H. SCHÖNHERR ; S. ZAPOTLOCZ.** Unraveling the nanomechanical properties of surface-grafted conjugated polymer brushes with ladder-like architecture. *Polym. Chem.,* 2020, vol. 11, 7050-7062, Https://doi.org/10.1039/d0py01422b
- **K. WOLSKI ; A. GRUSZKIEWICZ ; M. WYTRWAL-SARNA ; A. BERNASIK ; S. ZAPOTLOCZ.** The grafting density and thickness of polythiophene-based brushes determine the orientation, conjugation length and stability of the grafted chains. *Polym. Chem.,* 2017, vol. 8, 6250-6262, https://doi.org/10.1039/c7py01418j

- **A. POMORSKA ; K. WOLSKI ; M. WYTRWAL-SARNA ; A. BERNASIK.** S. Polymer brushes grafted from nanostructured zinc oxide layers - Spatially controlled decoration of nanorods. *Eur Polym. J.,* 2019, vol. 112, 186-194, https://doi.org/10.1016/j.eurpolymj.2019.01.012
- **G. PANZARASA ; G. SOLIVERI ; K. SPARNACCI ; S. ARDIZZONE.** Patterning of polymer brushes made easy using titanium dioxide: Direct and remote photocatalytic lithography. *Chem. Commun.,* 2015, vol. 51, 7313-7316, https://doi.org/10.1039/c5cc00255a
- **M. STOWIKOWSKA ; K. WOLSKI ; A.J. WÓJCIK ; D. WESNER ; H. SCHÖNHERR.** S. Unraveling the nanomechanical properties of surface-grafted conjugated polymer brushes with ladder-like architecture. *Polym. Chem.,* 2020, vol. 11, 7050-7062, https://doi.org/10.1039/d0py01422b.
- **K. WOLSKI ; A. POMORSKA ; T. UCHACZ ; A. GUT ; L. LAPOK ; S. ZAPOTOCZNY.** Photoactive Surface-Grafted Polymer Brushes with Phthalocyanine Bridging Groups as an Advanced Architecture for Light-Harvesting. *Chem. - A Eur. J.,* 2017, vol. 23, 11239-11243, https://doi.org/10.1002/chem.201702737
- **K. WOLSKI ; A. GRUSZKIEWICZ ; M. WYTRWAL-SARNA ; A. BERNASIK.** S. The grafting density and thickness of polythiophene-based brushes determine the orientation, conjugation length and stability of the grafted chains. *Polym. Chem.,* 2017, vol. 8, 6250-6262